# EUROPEAN PATENT APPLICATION

(11) **EP 4 580 110 A1**
(43) Date of publication of application: **02.07.2025**
(21) Application number: 23870200.5
(22) Date of filing: 05.09.2023
(51) Int. Cl.: H04L 5/20, H04W 68/06

(54) **COMMUNICATION METHOD, AND APPARATUS**

(30) Priority: 27.09.2022 CN 202211186295
(71) Applicant: Huawei Technologies Co., Ltd., Shenzhen, Guangdong 518129 (CN)
(72) Inventor: SUN, Fei, Shenzhen, Guangdong 518129 (CN); ZHU, Yuanping, Shenzhen, Guangdong 518129 (CN); SHI, Yulong, Shenzhen, Guangdong 518129 (CN); ZHU, Shichao, Shenzhen, Guangdong 518129 (CN)
(74) Representative: Gill Jennings & Every LLP
(86) International application number: PCT/CN2023/117012
(87) International publication number: WO 2024/066960

(57) **Abstract**

A communication method and apparatus are provided to resolve problems such as a paging failure of an in-vehicle terminal in inactive (Inactive) state. In embodiments of this application, when an in-vehicle integrated access and backhaul (integrated access and backhaul, IAB) node migrates between IAB donor nodes, the in-vehicle IAB node triggers a terminal in inactive state served by a cell of the in-vehicle IAB node to initiate an RRC connection resume process. In the RRC connection resume process, a context of the inactive terminal may be migrated to an IAB donor node currently accessed by the in-vehicle IAB node. The IAB donor node currently accessed by the in-vehicle IAB node is used as a last serving donor node of the in-vehicle terminal in inactive state, and can successfully obtain the terminal in inactive state through paging.

## Description

### CROSS-REFERENCE TO RELATED APPLICATIONS

This application claims priority to Chinese Patent Application No. 202211186295.7, filed with the China National Intellectual Property Administration on September 27, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In comparison with a 4th generation mobile communication system, in a 5th generation mobile communication system, stricter requirements are imposed on network performance indicators, for example, 1000-fold capacity improvement, wider coverage, an ultra-high reliability and ultra-low latency. Considering that high-frequency carrier frequency resources are abundant, in a hotspot area, to meet a requirement for an ultra-high capacity of 5G, high-frequency small cell networking becomes increasingly popular. High-frequency carriers have poor propagation performance, are severely attenuated if blocked, and have small coverage. Therefore, a large quantity of small cells need to be densely deployed. Correspondingly, it is costly to provide optical fiber backhaul for the large quantity of densely deployed small cells, and construction is difficult. Therefore, an economical and convenient backhaul solution is needed. In addition, in consideration of the requirement of the wide coverage, it is difficult and costly to deploy optical fibers for network coverage in some remote areas. Therefore, a flexible access and backhaul solution is also needed. An integrated access and backhaul (integrated access and backhaul, IAB) technology provides an idea to resolve the foregoing two problems. An access link (access link) and a backhaul link (backhaul link) thereof each use a wireless transmission solution, to reduce the deployment of the optical fibers.

In an IAB network, how to trigger a terminal in inactive state to initiate a radio resource control (radio resource control, RRC) connection resume process is a research direction.

### SUMMARY

Embodiments of this application provide a communication method and apparatus, to trigger a terminal in inactive state to initiate an RRC connection resume process.

According to a first aspect, a communication method is provided. The method is performed by a first IAB node or a component (a chip, a circuit, or the like) in the first IAB node. That the method is performed by the first IAB node is used as an example. The method includes: The first IAB node migrates from a first IAB donor node to a second IAB donor node. The first IAB node triggers a terminal in inactive state served by a cell of the first IAB node to initiate a radio resource control RRC connection resume process.

According to the foregoing design, when an in-vehicle IAB node migrates between IAB donor nodes, the in-vehicle IAB node triggers a terminal in inactive state served by a cell of the in-vehicle IAB node to initiate an RRC connection resume process. In the RRC connection resume process, a context of the inactive terminal may be migrated to an IAB donor node currently accessed by the in-vehicle IAB node. The IAB donor node currently accessed by the in-vehicle IAB node is used as a last serving donor node of the in-vehicle terminal in inactive state, and can successfully obtain the terminal in inactive state through paging.

In a design, that the first IAB node triggers a terminal in inactive state served by a cell of the first IAB node to initiate an RRC connection resume process includes: The first IAB node sends first indication information to the terminal in inactive state, where the first indication information indicates the terminal in inactive state to update a radio access network-based notification area RNA.

According to the foregoing design, the first IAB node may separately send the first indication information to the terminal in inactive state, or the first indication information may be carried in a message. For example, the first indication information is carried in a paging message. In a process in which the terminal in inactive state updates the RNA, the context of the terminal in inactive state is migrated from the last serving donor node to a currently accessed IAB donor node, that is, the second IAB donor node, to ensure that the terminal in inactive state is obtained through paging.

In a design, before the first IAB node sends the first indication information to the terminal in inactive state, the method further includes: The first IAB node receives the first indication information from the second IAB donor node.

According to the foregoing design, the RRC connection resume process of the terminal in inactive state may be triggered by the first IAB node, or may be triggered by the second IAB donor node or the first IAB donor node. When the triggering is performed by the second IAB donor node, the second IAB donor node sends the first indication information to the first IAB node, and the first IAB node forwards the first indication information to the terminal in inactive state. When the triggering is performed by the first IAB donor node, the first IAB node sends the first indication information to a second IAB node, and the second IAB node forwards the first indication information to the terminal in inactive state via the first IAB node. A solution in which the first IAB donor node or the second IAB donor node triggers the terminal in inactive state to resume an RRC connection is easy to implement.

In a design, that the first IAB node triggers a terminal in inactive state served by a cell of the first IAB node to initiate an RRC connection resume process includes: The first IAB node sends a broadcast message to the terminal in inactive state, where the broadcast message includes one or more of the following: an updated cell identity of the first IAB node, an updated tracking area code TAC of the first IAB node, or an updated radio access network-based notification area code RAC of the first IAB node.

In a design, before the first IAB node sends the broadcast message to the terminal in inactive state, the method further includes: The first IAB node updates one or more of the following: a cell identity of the first IAB node, a TAC of the first IAB node, or an RAC of the first IAB node.

In a design, before the first IAB node sends the broadcast message to the terminal in inactive state, the method further includes: The first IAB node receives one or more of the following from the second IAB donor node: the updated cell identity of the first IAB node, the updated TAC of the first IAB node, or the updated RAC of the first IAB node.

In a design, that the first IAB node triggers a terminal in inactive state served by a cell of the first IAB node to initiate an RRC connection resume process includes: The first IAB node sends a paging message to the terminal in inactive state.

In a design, before the first IAB node sends the paging message to the terminal in inactive state, the method further includes: The first IAB node receives paging information from the second IAB donor node.

According to a second aspect, a communication method is provided. The method is performed by a terminal in inactive state or a component (a chip, a circuit, or the like) in the terminal in inactive state. That the method is performed by the terminal in inactive state is used as an example. The method includes: The terminal in inactive state receives first indication information from a first integrated access and backhaul IAB node, where the first indication information indicates the terminal in inactive state to update a radio access network-based notification area RNA. The terminal initiates an RNA update process based on the first indication information.

According to the foregoing method, it can be ensured that an in-vehicle terminal in inactive state updates the RNA in time in a process in which an in-vehicle IAB node moves. This ensures communication between the terminal and a network, and improves service experience of the terminal.

According to a third aspect, a communication method is provided. The method is performed by a first IAB donor node or a component (a chip, a circuit, or the like) in the first IAB donor node. That the method is performed by the first IAB node is used as an example. The method includes: The first IAB donor node sends first indication information to a second IAB donor node, where the first indication information indicates a terminal in inactive state served by a cell of a first IAB node to update a radio access network-based notification area RNA, where the first IAB donor node is a source donor of the first IAB node, and the second IAB donor node is a target donor of the first IAB node.

In a design, the first IAB donor node further sends identification information of the first IAB node to the second IAB donor node.

According to a fourth aspect, a communication method is provided. The method is performed by a second IAB donor node or a component (a chip, a circuit, or the like) in the second IAB donor node. The method includes: The second IAB donor node receives first indication information from a first IAB donor node, where the first indication information indicates a terminal in inactive state served by a cell of a first IAB node to update a radio access network-based notification area RNA, where a source donor of the first IAB node is the first IAB donor node, and a target donor of the first IAB is the second IAB donor node. The second IAB donor node sends the first indication information to the first IAB node.

In a design, before the second IAB donor node sends the first indication information to the first IAB node, the method further includes: The second IAB donor node receives identification information of the first IAB node from the first IAB donor node. The second IAB donor node determines the first IAB node based on the identification information of the first IAB node.

According to a fifth aspect, a communication method is provided. The method is performed by a first IAB donor node or a component (a chip, a circuit, or the like) in the first IAB donor node. The method includes: The first IAB donor node sends paging information to a second IAB donor node, where the first IAB donor node is a source donor of a first IAB node, and the second IAB donor node is a target donor of the first IAB node.

In a design, the paging information includes identification information of the first IAB node.

According to a sixth aspect, a communication method is provided. The method is performed by a second IAB donor node or a component (a chip, a circuit, or the like) in the second IAB donor node. The method includes: The second IAB donor node receives paging information from a first IAB donor node. The second IAB donor node sends the paging information to a first IAB node, where a source donor of the first IAB node is the first IAB donor node, and a target donor of the first IAB node is the second IAB donor node.

In a design, the paging information includes identification information of the first IAB node, and before the second IAB donor node sends the paging information to the first IAB node, the method further includes: The second IAB donor node determines the first IAB node based on the identification information of the first IAB node.

According to a seventh aspect, a communication method is provided. The method is performed by a first IAB donor node or a component (a chip, a circuit, or the like) in the first IAB donor node. The method includes: The first IAB donor node sends a handover request to a second IAB donor node, where the handover request includes an identifier of a last serving donor of a terminal in inactive state served by a cell of a first IAB node, the first IAB donor node is a source donor of the first IAB node, and the second IAB donor node is a target donor of the first IAB node. The first IAB donor node receives a handover response from the second IAB donor node, where the handover response includes second indication information, and the second indication information indicates whether there is an interface between the last serving donor of the terminal in inactive state and the second IAB donor node.

According to the foregoing design, before the IAB node migrates between the donors, the source donor sends the handover request to the target donor, where the handover request carries identification information of the last serving donor of the terminal in inactive state. The target donor may determine whether there is an Xn interface between the last serving donor of the terminal in inactive state and the target donor. If there is no Xn interface between the target donor and the last serving donor, it indicates that the last serving donor cannot successfully send RAN paging information to the target donor through the Xn interface when receiving service data of the terminal in inactive state. Therefore, in this embodiment of this application, in this case, a context of the terminal in inactive state may be migrated from the last serving donor to the source donor. The source donor is used as a last serving donor of the terminal in inactive state. There is an Xn interface between the source donor and the target donor to which the IAB node is to migrate, so that by sending the RAN paging information through different interfaces, the terminal in inactive state can be successfully obtained through paging.

In a design, when there is no interface between the last serving donor and the second IAB donor node, the method further includes: The first IAB donor node triggers the terminal in inactive state served by the cell of the first IAB node to initiate a radio resource control RRC connection resume process.

In a design, that the first IAB donor node triggers the terminal in inactive state served by the cell of the first IAB node to initiate an RRC connection resume process includes: The first IAB donor node sends first indication information to the first IAB node, where the first indication information indicates the terminal in inactive state to update a radio access network-based notification area RNA.

In a design, that the first IAB donor node triggers the terminal in inactive state served by the cell of the first IAB node to initiate an RRC connection resume process includes: The first IAB donor node sends one or more of the following to the first IAB node: an updated cell identity of the first IAB node, an updated tracking area code TAC of the first IAB node, or an updated radio access network-based notification area code RAC of the first IAB node.

In a design, that the first IAB donor node triggers the terminal in inactive state served by the cell of the first IAB node to initiate an RRC connection resume process includes: The first IAB donor node sends paging information to the first IAB node.

In a design, when there is no interface between the last serving donor and the second IAB donor node, the method further includes: The first IAB donor node sends a request message to the last serving donor of the terminal in inactive state, where the request message is used to request the last serving donor of the terminal in inactive state to trigger the terminal in inactive state to initiate an RRC connection resume process.

In a design, the request message includes identification information of the first IAB node.

According to an eighth aspect, a communication method is provided. The method is performed by a second IAB donor node or a component (a chip, a circuit, or the like) in the second IAB donor node. The method includes: The second IAB donor node receives a handover request from a first IAB donor node, where the handover request includes an identifier of a last serving donor of a terminal in inactive state served by a cell of a first IAB node, a source donor of the first IAB node is the first IAB donor node, and a target donor of the first IAB node is the second IAB donor node. The second IAB donor node sends a handover response to the first IAB donor node, where the handover response includes second indication information, and the second indication information indicates whether there is an interface between the last serving donor of the terminal in inactive state and the second IAB donor node.

According to a ninth aspect, a communication method is provided. The method is performed by a last serving donor of a terminal in inactive state or a component (a chip, a circuit, or the like) in the last serving donor of the terminal in inactive state. The method includes: The last serving donor of the terminal in inactive state served by a cell of a first IAB node receives a request message from a first IAB donor node, where the request message is used to request the last serving donor to trigger the terminal in inactive state to initiate a radio resource control RRC connection resume process, and the first IAB donor node is a source donor of the first IAB node. The last serving donor triggers the terminal in inactive state to initiate the radio resource control RRC connection resume process.

In a design, the request message includes identification information of the first IAB node.

In a design, before the last serving donor triggers the terminal in inactive state to initiate the RRC connection resume process, the method further includes: The last serving donor determines the first IAB node based on the identification information of the first IAB node. The last serving donor triggers, via the first IAB node, the terminal in inactive state to initiate the RRC connection resume process.

In a design, that the last serving donor triggers the terminal in inactive state to initiate the RRC connection resume process includes: The last serving donor sends first indication information to the first IAB node, where the first indication information indicates the terminal in inactive state to update a radio access network-based notification area RNA.

In a design, that the last serving donor triggers the terminal in inactive state to initiate the RRC connection resume process includes: The last serving donor sends one or more of the following to the first IAB node: an updated cell identity of the first IAB node, an updated tracking area code TAC of the first IAB node, or an updated radio access network-based notification area code RAC of the first IAB node.

In a design, that the last serving donor triggers the terminal in inactive state to initiate the RRC connection resume process includes: The last serving donor sends paging information to the first IAB node.

According to a tenth aspect, a communication method is provided. The method is performed by a first IAB node or a component (a chip, a circuit, or the like) in the first IAB node. The method includes: The first IAB node receives first indication information from an IAB donor node, where the first indication information indicates a terminal in inactive state served by a cell of the first IAB node to initiate a radio resource control RRC connection resume process, and the donor node is a source IAB donor node of the first IAB node or a last serving donor of the terminal in inactive state. The first IAB node sends the first indication information to the terminal in inactive state.

According to an eleventh aspect, a communication method is provided. The method is performed by a first IAB node or a component (a chip, a circuit, or the like) in the first IAB node. The method includes: The first IAB node receives one or more of the following from a donor node: an updated cell identity of the first IAB node, an updated tracking area code TAC of the first IAB node, or an updated radio access network-based notification area code RAC of the first IAB node. The donor node is a source donor node of the first IAB node or a last serving donor of a terminal in inactive state. The first IAB node sends a broadcast message to the terminal in inactive state, where the broadcast message includes one or more of the following: the updated cell identity of the first IAB node, the updated TAC of the first IAB node, or the updated RAC of the first IAB node.

According to a twelfth aspect, a communication method is provided. The method is performed by a first IAB node or a component (a chip, a circuit, or the like) in the first IAB node. The method includes: The first IAB node receives paging information from a donor node, where the donor node is a source donor node of the first IAB node or a last serving donor of a terminal in inactive state served by a cell of the first IAB node. The first IAB node sends a paging message to the terminal in inactive state based on the paging information, where the paging message is used to trigger the terminal in inactive state to initiate a radio resource control RRC connection resume process.

According to a thirteenth aspect, a communication method is provided. The method is performed by a first IAB donor node or a component (a circuit or a chip) in the first IAB donor node. The method includes: The first IAB donor node receives paging information from a second IAB donor node, where the paging information carries identification information of a first IAB node. The first IAB donor node determines, based on the identification information of the first IAB node, that the first IAB node does not access the first IAB donor node. The first IAB donor node sends the paging information to a third IAB donor node.

According to the foregoing design, when receiving a RAN paging message, each IAB donor node forwards the RNA paging information to another IAB donor node that has an Xn interface with the IAB donor node. In the foregoing multi-hop forwarding manner of the RAN paging information, even if there is no Xn interface between a current serving donor node and a last serving donor node, the RAN paging information may be forwarded to the current donor node via another donor node, to successfully obtain a terminal in inactive state through paging.

In a design, before the first IAB donor node sends the paging information to the third IAB donor node, the method further includes: The first IAB donor node determines the third IAB donor node based on the identification information of the first IAB node.

In a design, that the first IAB donor node sends the paging information to the third IAB donor node includes: The first IAB donor node sends the paging information to an IAB donor node that has an interface with the first IAB donor node, where the IAB donor node that has the interface with the first IAB donor node includes the third IAB donor node.

In a design, the method further includes: The first IAB donor node determines, based on the identification information of the first IAB node, that the first IAB node accesses the first IAB donor node. The first IAB donor node sends the paging information to the first IAB node.

According to a fourteenth aspect, a communication method is provided. The method is performed by an access network intelligent controller RIC or a component (a chip, a circuit, or the like) in the RIC. The method includes: The RIC receives paging information from a first integrated access and backhaul IAB donor node. The RIC sends the paging message to a second IAB donor node or a first IAB node. The first IAB donor node is a last serving donor of a terminal in inactive state served by a cell of the first IAB node, and the second IAB donor node is a current serving donor of the terminal in inactive state served by the cell of the first IAB node.

According to the foregoing design, in a mobile IAB scenario of an O-RAN architecture, a network can obtain an in-vehicle terminal in inactive state through paging, to ensure a connection between the terminal and the network, and improve service experience of the terminal.

In a design, the paging information includes identification information of the first IAB node.

In a design, before the RIC sends the paging information to the second IAB donor node or the first IAB node, the method further includes: The RIC determines the second IAB donor node or the first IAB node based on the identification information of the first IAB node.

In a design, that the RIC sends the paging information to the second IAB donor node or the first IAB node includes: The RIC sends the paging information to an IAB donor node that has an interface with the RIC, where the IAB donor node that has the interface with the RIC includes the second IAB donor node. Alternatively, the RIC sends the paging information to an IAB node that has an interface with the RIC, where the IAB node that has the interface with the RIC includes the first IAB node.

According to a fifteenth aspect, a communication method is provided. The method is performed by a second IAB donor node or a component in the second IAB donor node. The method includes: The second IAB donor node receives paging information from an access network intelligent controller RIC, where the paging information includes identification information of a first IAB node, and the second IAB donor node is a current serving donor of a terminal in inactive state served by a cell of the first IAB node. The second IAB donor node determines the first IAB node based on the identification information of the first IAB node. The second IAB donor node sends the paging information to the first IAB node, where the paging information is used to page the terminal in inactive state served by the cell of the first IAB node.

According to a sixteenth aspect, a communication method is provided. The method is performed by a first IAB node or a component (a chip, a circuit, or the like) in the first IAB node. The method includes: The first integrated access and backhaul IAB node receives paging information from an access network intelligent controller RIC, where the paging information includes identification information of the first IAB node. The first IAB node sends, based on the paging information, a paging message to a terminal in inactive state served by a cell of the first IAB node.

According to a seventeenth aspect, an apparatus is provided. The apparatus includes a corresponding unit or module for performing the method described in any one of the first aspect to the sixteenth aspect. The unit or module may be implemented by a hardware circuit, may be implemented by software, or may be implemented by a combination of a hardware circuit and software.

According to an eighteenth aspect, an apparatus is provided, and includes a processor and an interface circuit. The processor is configured to: communicate with another apparatus through the interface circuit, and perform the method described in any one of the first aspect to the sixteenth aspect. There are one or more processors.

According to a nineteenth aspect, an apparatus is provided, and includes a processor coupled to a memory. The processor is configured to execute a program stored in the memory, to perform the method described in any one of the first aspect to the sixteenth aspect. The memory may be located inside or outside the apparatus. In addition, there may be one or more processors.

According to a twentieth aspect, an apparatus is provided, and includes a processor and a memory. The memory is configured to store computer instructions. When the apparatus runs, the processor executes the computer instructions stored in the memory, to enable the apparatus to perform the method described in any one of the first aspect to the sixteenth aspect.

According to a twenty-first aspect, a chip system is provided, and includes a processor or a circuit, configured to perform the method described in any one of the first aspect to the sixteenth aspect.

According to a twenty-second aspect, a computer-readable storage medium is provided. The computer-readable storage medium stores instructions. When the instructions are run on a communication apparatus, the method described in any one of the first aspect to the sixteenth aspect is performed.

According to a twenty-third aspect, a computer program product is provided. The computer program product includes a computer program or instructions. When the computer program or the instructions are run by an apparatus, the method described in any one of the first aspect to the sixteenth aspect is performed.

According to a twenty-fourth aspect, a communication system is provided, and includes the first IAB node, the first IAB donor node, and the second IAB donor node in the first aspect to the sixteenth aspect. Optionally, a terminal in inactive state may be further included.

### BRIEF DESCRIPTION OF DRAWINGS

FIG. 1 is a diagram of an IAB network according to an embodiment of this application;
FIG. 2 is a diagram of a multi-hop IAB network according to an embodiment of this application;
FIG. 3 is a diagram of a control plane CP protocol stack according to an embodiment of this application;
FIG. 4 is a diagram of a user plane UP protocol stack according to an embodiment of this application;
FIG. 5 is a diagram of a network architecture according to an embodiment of this application;
FIG. 6 is a diagram of another network architecture according to an embodiment of this application;
FIG. 7 is a diagram of RRC connection resume according to an embodiment of this application;
FIG. 8 is a diagram of updating an RNA according to an embodiment of this application;
FIG. 9 is a diagram of a scenario according to an embodiment of this application;
FIG. 10 and FIG. 11 are flowcharts according to an embodiment 1 of this application;
FIG. 12 and FIG. 13 are flowcharts according to an embodiment 2 of this application;
FIG. 14 and FIG. 15 are flowcharts according to an embodiment 3 of this application;
FIG. 16 is a diagram of an O-RAN architecture according to an embodiment of this application;
FIG. 17 is a flowchart according to an embodiment 4 of this application; and
FIG. 18 and FIG. 19 are diagrams of structures of apparatuses according to embodiments of this application.

### DESCRIPTION OF EMBODIMENTS

To make objectives, technical solutions, and advantages of embodiments of this application clearer, the following further describes embodiments of this application in detail with reference to the accompanying drawings. A specific operation method in a method embodiment may also be applied to an apparatus embodiment or a system embodiment.

Before embodiments of this application are described, some terms in embodiments of this application are first described briefly to facilitate understanding of a person skilled in the art.
(1) A terminal is a device that provides voice and/or data connectivity for a user. The terminal in this application may be a terminal or a hardware component that can implement a function of the terminal in the terminal.

The terminal may also be referred to as a terminal device, a user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IOT) scenario, a virtual reality scenario, an augmented reality scenario, an industrial control scenario, a self-driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application. For ease of description, the following uses an example in which the UE is used as the terminal for description.

The function of the terminal may be implemented by using a hardware component inside the terminal, and the hardware component may be a processor and/or a programmable chip inside the terminal. Optionally, the chip may be implemented by using an application-specific integrated circuit (application-specific integrated circuit, ASIC) or a programmable logic device (programmable logic device, PLD). The PLD may be any one of a complex programmable logical device (complex programmable logical device, CPLD), a field-programmable gate array (field-programmable gate array, FPGA), generic array logic (generic array logic, GAL), and a system on a chip (system on a chip, SoC), or any combination thereof.

For the various terminal examples described above, if the terminals are located in a vehicle (for example, placed in the vehicle or installed in the vehicle), the terminals may be all considered as in-vehicle terminals. For example, the in-vehicle terminals are also referred to as on-board units (on-board units, OBUs).

(2) A wireless backhaul device may provide a wireless access service for the terminal through an access link (access link, AL). The wireless backhaul device is connected to a donor node through a backhaul link (backhaul link, BL or BH) to transmit service data of the terminal, and expands coverage of a mobile communication system by resending or forwarding the service data. In an example, in long term evolution (long term evolution, LTE), the wireless backhaul device may be referred to as a relay node (relay node, RN), and may also be referred to as a relay device, a relay transmission reception point (relay transmission and reception point, rTRP), a transmission point (transmission point, TP), or the like.

The wireless backhaul device may set up a wireless backhaul link to one or more upper-level nodes (parent nodes), and access a core network via the upper-level node. The upper-level node may control (for example, perform data scheduling, timing modulation, and power control on) the wireless backhaul device by using a plurality of types of signaling. In addition, the wireless backhaul device may provide a service for one or more lower-level nodes (child nodes). The upper-level node of the wireless backhaul device may be a donor node, or may be another wireless backhaul device. The lower-level node of the wireless backhaul device may be a terminal, or may be another wireless backhaul device.

In an integrated access and backhaul (integrated access and backhaul, IAB) network, the wireless backhaul device may be an IAB node. The IAB node includes a mobile termination (mobile termination, MT) and a distributed unit (distributed unit, DU). When facing a parent node of the IAB node, the IAB node may be used as a terminal, that is, a role of the MT, configured to provide data backhaul for a child node of the IAB node, and may be referred to as an IAB-MT. When facing the child node of the IAB node, the IAB node is used as a network device, that is, a role of the DU, configured to provide an access service for the child node of the IAB node, and may be referred to as an IAB-DU. The child node of the IAB node may be another IAB node or a terminal.

(3) The donor node (or referred to as a donor for short) may access the core network, and is a device that is in a relay network and that is configured to connect the terminal to a wireless network. The donor node may be connected to the core network through a wired link (for example, an optical fiber cable). The donor node may be responsible for receiving data from the core network and forwarding the data to the wireless backhaul device, or receiving data from the wireless backhaul device and forwarding the data to the core network. In the IAB network, the donor node may be an IAB donor node (or referred to as an IAB donor).

In an example, the donor node may include a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), or the like, may include a base station in an evolved LTE system (LTE-Advanced, LTE-A) or a 4G access network: an evolved universal mobile telecommunications system (universal mobile telecommunications system, UMTS) terrestrial radio access network (evolved UMTS terrestrial radio access network, E-UTRAN), for example, an evolved NodeB (a NodeB, an eNB, an e-NodeB, or an evolutional NodeB), or may include a next generation NodeB (next generation NodeB, gNB) in a fifth generation (fifth generation, 5G) mobile communication technology new radio (new radio, NR) system or the like.

In another example, the donor node may include a CU (in this application, the CU in the donor node is referred to as a donor-CU (donor-CU) or a gNB-CU) and a DU (in this application, the DU in the donor node is referred to as a donor-DU (donor-DU) or a gNB-DU). The gNB-CU and the gNB-DU are connected through an F1 interface. The F1 interface may further include a control plane interface (F1-C) and a user plane interface (F 1-U). The CU is connected to the core network through a next generation (next generation, NG) interface. Alternatively, the gNB-CU or the donor-CU may exist in a form in which a user plane (user plane, UP) (which is referred to as a CU-UP for short in this application) and a control plane (control plane, CP) (which is referred to as a CU-CP for short in this application) are separated. In other words, the gNB-CU or the donor-CU includes the CU-CP and the CU-UP. One gNB-CU may include one gNB-CU-CP and at least one gNB-CU-UP. Alternatively, one donor-CU may include one donor-CU-CP and at least one donor-CU-UP.

For example, for the IAB donor node, the donor-CU may be referred to as an IAB-donor-CU (IAB-donor-CU), and the donor node DU may be referred to as an IAB-donor-DU. A function of the IAB-donor-DU is similar to that of the gNB-DU, and the IAB-donor-DU may be mainly configured to implement functions of layer 1 (layer 1, L1) and layer 2 (layer 2, L2) protocol stacks, including a function of a physical (physical, PHY) layer, a medium access control (media access control, MAC) layer, or a radio link control (radio link control, RLC) layer. A function of the IAB-donor-CU is similar to that of the gNB-CU, and the IAB-donor-CU mainly implements a function of a packet data convergence protocol (packet data convergence protocol, PDCP) layer, a service data adaptation protocol (service data adaption protocol, SDAP) layer, or a radio resource control (radio resource control, RRC) layer. An F1-C interface is set up between the IAB-donor-CU-CP and the IAB-DU, and an F1-U interface is set up between the IAB-donor-CU-UP and the IAB-DU.

A function of the donor node may be implemented by using a hardware component inside the donor node, for example, implemented by using a processor and/or a programmable chip inside the donor node. For example, the chip may be implemented by using an ASIC or a PLD. The PLD may be any one of a CPLD, an FPGA, GAL, and a SoC or any combination thereof.

To support enhanced mobile broadband (enhanced mobile broadband, eMBB) and ultra-reliable and low-latency communication (ultra-reliable and low-latency communication, URLLC) service scenarios, a 5G NR protocol standard uses higher frequency bands, including a frequency band of sub-6 giga hertz (giga hertz, GHz) and a millimeter-wave frequency band, to obtain more bandwidth resources. High-frequency signals have a poor propagation characteristic, short wavelengths, and small signal coverage, and are severely attenuated if being blocked. Therefore, a large quantity of small cells need to be densely deployed. However, it is costly to provide optical fiber backhaul for the large quantity of densely deployed small cells, and construction is difficult. Therefore, an economical and convenient backhaul solution is needed. In addition, in consideration of a requirement of wide coverage, it is difficult and costly to deploy optical fibers for network coverage in some remote areas. Therefore, a flexible and convenient access and backhaul solution is also needed.

The IAB technology provides an idea to resolve the foregoing two problems: A wireless transmission solution is used for both the access link and the backhaul link in the IAB network, to reduce the deployment of the optical fibers. A key advantage of the IAB is to implement flexible and dense deployment of NR cells without densely deploying wired transmission networks in proportion. It is conceivable to deploy the IAB network in various scenarios, including deployment on an outdoor small cell, on an indoor small cell, and even on a mobile relay, for example, on a bus or train.

It should be understood that, in subsequent descriptions of this application, the IAB node is used as a wireless backhaul device, the IAB donor node is used as a donor node, and functions performed by the wireless backhaul device and the donor node in the method provided in embodiments of this application are described. However, it should not be understood as that an execution body in this application is limited to the IAB node and the IAB donor node. In other words, the IAB node in this application may alternatively be replaced with the relay node or the wireless backhaul device, and correspondingly, the IAB donor node may alternatively be replaced with the donor node. In other words, an application scenario of this application is not limited to the IAB network, and this application may be further applied to another type of relay network.

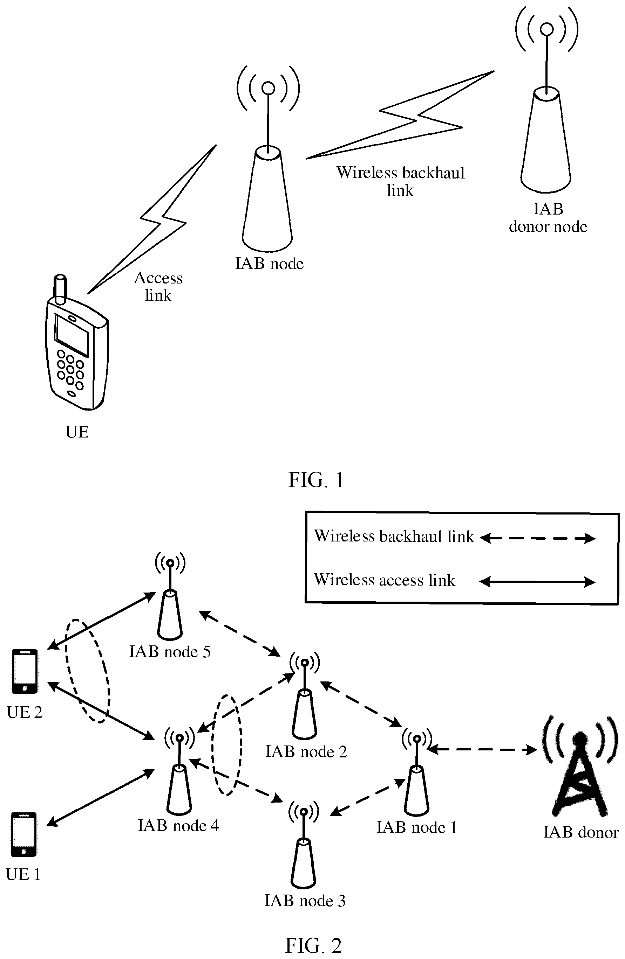

FIG. 1 shows an IAB network architecture. An IAB node is configured to provide wireless access and wireless backhaul of an access service for a UE. An IAB donor node is configured to: provide a wireless backhaul function for the IAB node, and provide an interface between the UE and a core network. The IAB node is connected to the IAB donor node through a wireless backhaul link, so that the UE served by the IAB node is connected to the core network.

FIG. 2 shows an IAB network architecture in multi-hop networking. Between a UE (including a UE 1 and a UE 2 shown in FIG. 2) served by an IAB node and an IAB donor node, there is at least one transmission path including a plurality of links, and each transmission path includes the UE, one or more IAB nodes, and the IAB donor node. Each IAB node considers an adjacent node that provides access and backhaul services for the IAB node as a parent node. Correspondingly, each IAB node may be considered as a child node of the parent node. For example, in FIG. 2, a parent node of an IAB node 1 is the IAB donor node, and the IAB node 1 is a parent node of an IAB node 2 and an IAB node 3. An uplink data packet of the UE may be transmitted to the IAB donor node via the one or more IAB nodes, and then sent by the IAB donor node to a mobile gateway device, for example, a user plane function (user plane function, UPF) unit in a 5G core network. A downlink data packet is received by the IAB donor node from the mobile gateway device, and then sent to the UE via the IAB node.

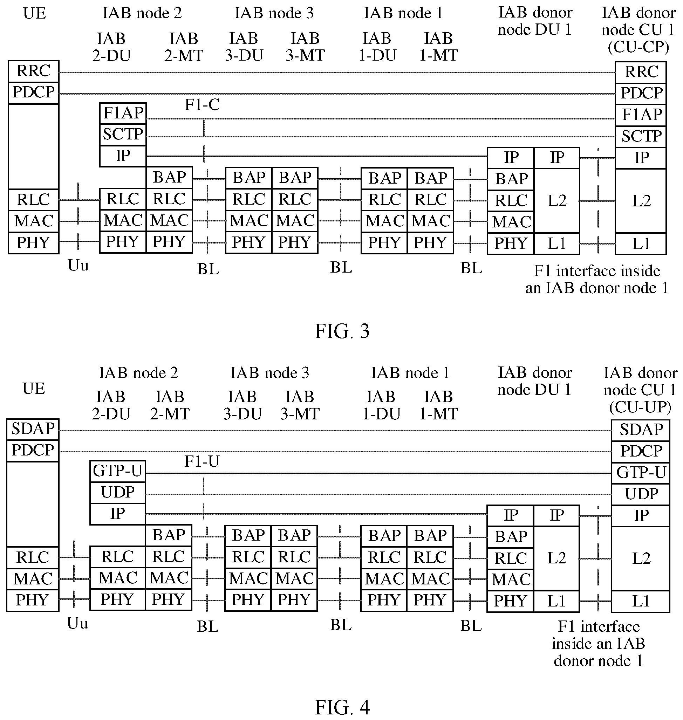

FIG. 3 and FIG. 4 are respectively diagrams of a CP protocol stack and a UP protocol stack of an IAB network with three-hop backhaul. In this architecture, a UE accesses the network via an IAB node 2, an IAB node 3, an IAB node 1, and an IAB donor node 1 in sequence. The following separately describes user plane service (F1-U traffic) and control plane service (F1-C traffic) procedures of an F1 interface based on FIG. 3 and FIG. 4.

For a CP plane, as shown in FIG. 3, a Uu interface is set up between the UE and an IAB 2-DU (that is, an IAB-DU of the IAB node 2), and peer protocol layers include RLC layers, MAC layers, and PHY layers. An F1-C interface is set up between the IAB 2-DU and an IAB-donor-CU 1 (that is, a CU of the IAB donor node 1), and peer protocol layers include F1 application protocol (F1 application protocol, F1AP) layers and stream control transmission protocol (stream control transmission protocol, SCTP) layers. An IAB donor node DU 1 (that is, an IAB-DU of the IAB donor node 1) and the IAB-donor-CU 1 are connected in a wired manner, and peer protocol layers include internet protocol (internet protocol, IP) layers, layers 2, and layers 1. A backhaul link is set up between the IAB node 2 and the IAB node 3, between the IAB node 3 and the IAB node 1, and between the IAB node 1 and the IAB donor node DU 1, and peer protocol layers include backhaul adaptation protocol (backhaul adaptation protocol, BAP) layers, RLC layers, MAC layers, and PHY layers. In addition, peer RRC layers and peer PDCP layers are set up between the UE and the IAB-donor-CU 1, and peer IP layers are set up between the IAB 2-DU (that is, the IAB-DU of the IAB node 2) and the IAB donor node DU 1. In comparison with a CP protocol stack of a single air interface, in the CP protocol stack of the IAB network, a DU of an access IAB node implements functions of a gNB-DU of the single air interface, that is, a function of setting up peer RLC layers, peer MAC layers, and peer PHY layers with the UE, and a function of setting up peer F1AP layers and peer SCTP layers with the IAB-donor-CU; and the IAB-donor-CU 1 implements a function of a gNB-CU of the single air interface.

On the CP, an RRC message is encapsulated in an F1AP message between the access IAB node and the IAB-donor-CU for transmission. Specifically, in an uplink direction, the UE encapsulates the RRC message in a PDCP protocol data unit (protocol data unit, PDU), and sends the PDCP protocol data unit to the IAB 2-DU after processing is sequentially performed at the RLC layer, the MAC layer, and the PHY layer. The IAB 2-DU obtains the PDCP PDU after processing is sequentially performed at the PHY layer, the MAC layer, and the RLC layer, encapsulates the PDCP PDU in the F1AP message, and obtains an IP packet after processing is sequentially performed at the SCTP layer and the IP layer. An IAB 2-MT (that is, an IAB-MT of the IAB node 2) sends the IP packet to an IAB 3-DU (that is, an IAB-DU of the IAB node 3) after processing is performed at the BAP layer, the RLC layer, the MAC layer, and the PHY layer. The IAB 3-DU obtains the IP packet after processing is sequentially performed at the PHY layer, the MAC layer, the RLC layer, and the BAP layer. Then, similar to an operation of the IAB 2-MT, an IAB 3-MT (that is, an IAB-MT of the IAB node 3) sends the IP packet to an IAB 1-DU (that is, an IAB-DU of the IAB node 1). Then, an IAB 1-MT (that is, an IAB-MT of the IAB node 1) sends the IP packet to the IAB donor node DU 1. After obtaining the IP packet through parsing, the IAB donor node DU 1 sends the IP packet to the IAB-donor-CU 1, and the IAB-donor-CU 1 obtains the RRC message after processing is sequentially performed on the IP packet at the SCTP layer, the F1AP layer, and the PDCP layer. A downlink direction is similar, and details are not described.

On the UP, as shown in FIG. 4, a Uu interface is set up between the UE and an IAB 2-DU, and peer protocol layers include RLC layers, MAC layers, and PHY layers. An F1-U interface is set up between the IAB 2-DU and an IAB-donor-CU 1, and peer protocol layers include general packet radio service (general packet radio service, GPRS) tunnelling protocol for the user plane (GPRS tunnelling protocol for the user plane, GTP-U) layers and user datagram protocol (user datagram protocol, UDP) layers. An IAB donor node DU 1 and the IAB-donor-CU 1 are connected in a wired manner, and peer protocol layers include IP layers, L2s, and L1s. A BL is set up between the IAB node 2 and the IAB node 3, between the IAB node 3 and the IAB node 1, and between the IAB node 1 and the IAB donor node DU 1, and peer protocol layers include BAP layers, RLC layers, MAC layers, and PHY layers. In addition, peer SDAP layers and peer PDCP layers are set up between the UE and the IAB-donor-CU 1, and peer IP layers are set up between the IAB 2-DU and the IAB donor node DU 1. In comparison with a UP protocol stack of a single air interface, a DU of an IAB access node implements some functions of a gNB-DU of the single air interface, that is, a function of setting up peer RLC layers, peer MAC layers, and peer PHY layers with a terminal, and a function of setting up peer GTP-U layers and peer UDP layers with the IAB-donor-CU 1; and the IAB-donor-CU implements a function of a gNB-CU of the single air interface.

The IAB network supports multi-hop backhaul, and the multi-hop network relates to routing and forwarding between nodes. In the CP and UP protocol stacks of the IAB architecture, a new protocol layer: BAP layer is introduced to the wireless backhaul link, and is located above the RLC layer, to implement functions such as routing of a data packet on the wireless backhaul link and bearer mapping. For details, refer to a 3rd generation partnership project (3rd generation partnership project, 3GPP) technical specification (technical specification, TS) 38.340 standard. A corresponding BAP entity on the IAB node executes a BAP layer protocol, and a function of the BAP entity includes adding a BAP header (header) to an IP data packet from an upper layer, where the BAP header includes a BAP routing identity (identity, ID). Specifically, the BAP routing identity may include a BAP address of a destination node and an identifier of a path (which may be represented as a path (path) in this application) to the node. It should be understood that, in this application, the BAP address of the destination node in the BAP routing identity may be referred to as a BAP address in the BAP routing identity or a BAP address in the routing identity for short. Each IAB node is configured with uplink (uplink, UL) and downlink (downlink, DL) routing tables (configured by the IAB-donor-CU), where a DU of the IAB node uses the DL table, and an MT of the IAB node uses the UL table. A BAP layer entity of the IAB node indicates, by using the routing table, a child node (if DL) or a parent node (if UL) to which a data packet should be forwarded. When the access IAB node receives the data packet, the data packet is forwarded to a higher layer, and is processed in a manner of processing an incoming F1-U or F1-C service data packet by a common DU.

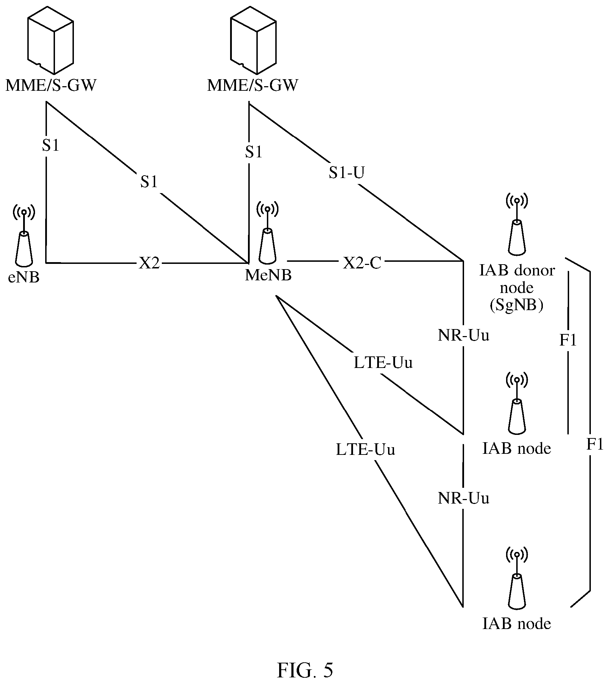

In addition, to improve service transmission reliability, the IAB node may support dual connectivity (dual connectivity, DC) (referred to as NR-DC) or multi-connectivity (multi-connectivity) networking, to cope with exceptions that may occur on the backhaul link, for example, link interruption, blockage (blockage), and load fluctuation. FIG. 2 shows an IAB standalone (standalone, SA) networking scenario, that is, the IAB node and the UE each set up a connection to a network through only an NR air interface. An IAB node 4 may be simultaneously connected to two parent nodes: the IAB node 2 and the IAB node 3, in an NR-DC form. The two parent nodes may be used as master nodes (master nodes, MNs) or secondary nodes (secondary nodes, SNs) of the IAB node 2. A cell group (cell group, CG) configured on an MN side is a master cell group (master cell group, MCG), and a cell group configured on an SN side is a secondary cell group (secondary cell group, SCG). The IAB network also supports non-standalone (non-standalone, NSA) networking. As shown in FIG. 5, the IAB node supports a 4G and 5G network dual connectivity (E-UTRAN NR dual connectivity, EN-DC) mode. An LTE base station eNB is a master base station (master eNB, MeNB), and is configured to: provide an LTE air interface (LTE Uu) connection for the UE or the IAB node, and set up an S1 interface with a 4G evolved packet core (evolved packet core, EPC) to perform user plane and control plane transmission. A cell group CG on an LTE side is an MCG. The eNB may be connected to a network element in the 4G core network, for example, connected to an LTE core network element like a mobility management entity (mobility management entity, MME)/serving (serving) packet data network (packet data network, PDN) gateway (S-PGW) through the S1 interface. The MME/S-PGW may be connected to an IAB donor node gNB through an S1-U interface.

The IAB donor node gNB is a 5G base station. For the UE or the IAB node, the IAB donor node gNB may be a master base station or a secondary base station, and may be configured to: provide an NR air interface (NR Uu) connection for the UE or the IAB node, and set up an S1 interface with the core network EPC for user plane transmission. A cell group CG on an NR side is an SCG. Similarly, the UE also supports the EN-DC. The UE is connected to the master base station eNB through an LTE Uu interface, and is connected to a secondary base station: the IAB node, through an NR Uu interface. The secondary base station of the UE may alternatively be the IAB donor node gNB. As shown in FIG. 5, the NSA scenario of the IAB network also supports multi-hop IAB networking, that is, the IAB node may be connected to the IAB donor node gNB through a multi-hop wireless backhaul link. The NSA networking is also referred to as EN-DC networking.

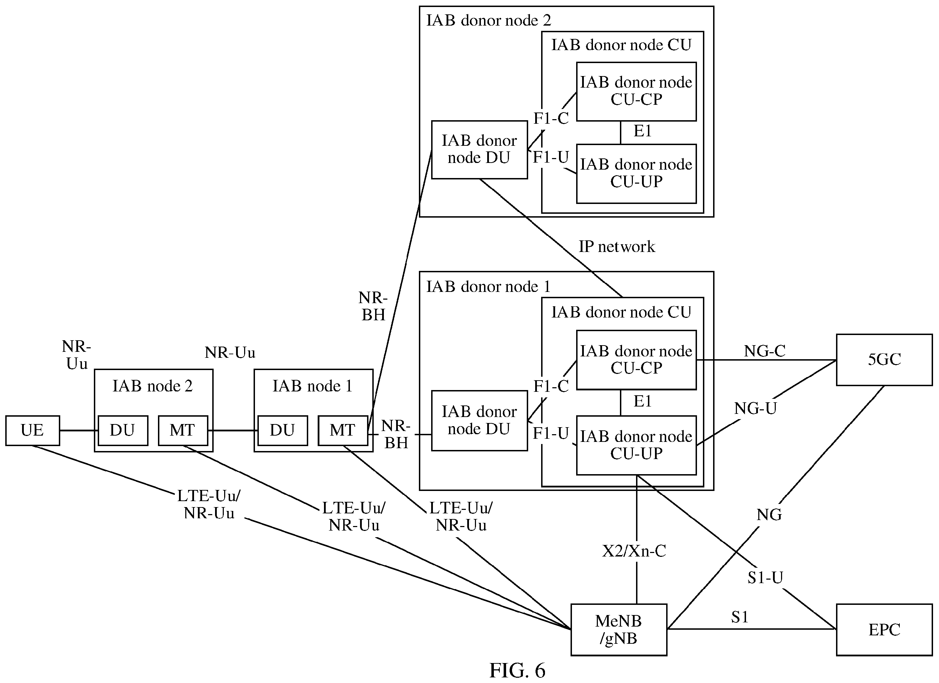

For example, an IAB network architecture in an SA networking mode is shown in FIG. 6. An IAB donor node 1 is used as an example. An IAB-donor-CU-CP may perform control plane signaling communication with a 5G core (5G core, 5GC) through a core network control plane interface (for example, an NG-C interface). An IAB-donor-CU-UP may perform user plane communication with the 5GC through a core network user plane interface (for example, an NG-U interface). In addition, the IAB donor node may be further connected to an EPC through an S1-U interface. In addition, a UE and an MT in an IAB node each may be connected to a base station (for example, a MeNB or a gNB) through an LTE air interface or an NR air interface. The base station may be connected to a core network (for example, the EPC or the 5GC) through an S1 interface or an NG interface. In addition, as shown in FIG. 6, a DU of an IAB donor node 2 may communicate with a CU of the IAB donor node 1 via an IP network.

In NR, UE modes include a connected (connected) state, an idle (idle) state, an inactive (Inactive) state, and the like. The idle state is a mode in which the UE completes camping on a cell but does not perform random access. Usually, after the UE is powered on or RRC is released, the UE enters the idle state. The idle state corresponds to the connected state. The connected state is a mode in which the UE completes the random access and sets up an RRC connection, and the RRC connection is not released. In connected state, the UE may perform data transmission with the base station. The inactive state is a mode between the connected state and the idle state. In inactive state, a user plane of an air interface is suspended (suspend), and a user plane bearer and a control plane bearer between a radio access network (radio access network, RAN) and a core network (core network, CN) are maintained. When the UE initiates a paging or service request, a user plane bearer of the air interface may be activated, and the existing user plane bearer and control plane bearer between the RAN and the CN may be reused. In comparison with the idle state, in inactive state, the NG interface and a UE context are retained. After quickly resuming an air interface connection, the UE may perform data transmission immediately.

When the UE is in connected state, the network can easily find the UE. When the UE is in idle state, the network may page the UE based on a registration area. For example, after the UE successfully performs random access, when the UE performs registration, the core network allocates a registration area to the UE. The registration area includes a tracking area identity (tracking area identity, TAI) list, the TAI list includes at least one tracking area (tracking area, TA), and each tracking area TA includes at least one cell. When the UE is in idle state, the core network initiates the UE paging, and the core network sends paging messages in all cells in all TAs in the TAI list. This is referred to as core network-level UE tracking. It is clear that this level of UE tracking results in high paging overheads because most of the paging messages are delivered in cells in which the UE is not located. To reduce transmission overheads of the paging, a delivery range of the paging messages needs to be narrowed down. To further reduce the transmission overheads of the paging messages, for the UE in inactive state, a "RAN-based notification area (RAN-based Notification Area, RNA)" smaller than a TA range is introduced. The RNA is managed by the base station, and the base station may page the UE based on the RNA. This is referred to as access network-level UE tracking.

The RNA is a reachability management area of the UE in inactive state, and is configured for the UE in a suspend configuration (suspend config) in an RRC release (release) message. The RNA supports the following two types of configurations:
A first type is a cell list. The cell list includes at least one cell. Optionally, a quantity of cells in the cell list does not exceed 32, and the cell list supports a maximum of eight public land mobile networks (public land mobile networks, PLMNs).

A second type is a RAN area configuration list (RAN area config list). The RAN area configuration list includes at least one RAN area code (RAN area code, RAC), and the RAC uniquely identifies one RNA. Optionally, the RAN area configuration list supports a maximum of eight PMMNs, 16 TACs, and 32 RACs. The RNA is a subset of the TA. For example, one TA includes m cells, and TACs of the m cells are the same, and are all a TAC corresponding to the TA. A subset of the TA may be the RNA. For example, the RNA includes n cells, the n cells belong to the m cells, and RACs of the n cells are the same, and are all an identifier corresponding to the RNA. The RAC may be specifically represented as: mobile country code (mobile country code, MCC)+mobile network code (mobile network code, MNC)+TAC+RAC. The MCC and the MNC uniquely identify a PLMN network. An RNA to which each cell belongs may be configured for the cell in a PLMN-Identity Info field in a system information block 1 (system information block 1, SIB1).

The base station may configure different RNA configuration schemes for different UEs, but one UE can use only one scheme for configuration at a time.

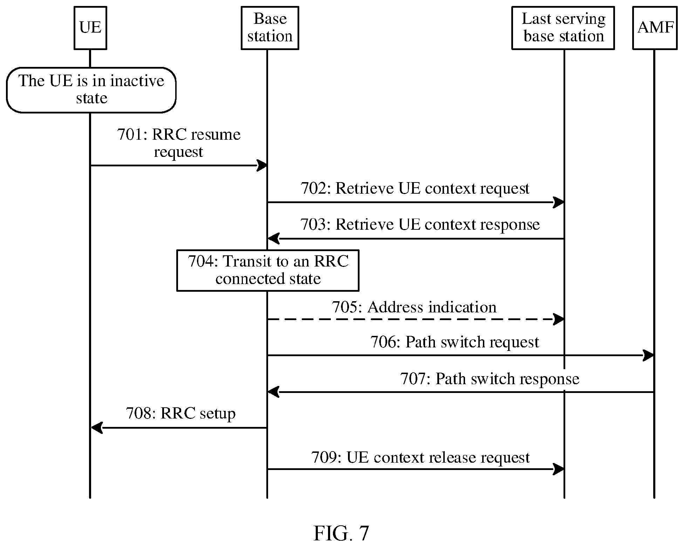

As described above, the base station pages the UE in inactive state based on the configured RNA. The following describes a processing procedure performed when the UE in inactive state receives a paging message from the base station. Refer to FIG. 7. The processing procedure includes at least the following steps.

Step 701: The UE in inactive state sends an RRC resume request (resume request) to a current serving base station.

The RRC resume request may carry an inactive-radio network temporary identity (Inactive-radio network temporary identity, I-RNTI) allocated by a last serving base station (last serving gNB) of the UE in inactive state to the UE in inactive state. The current serving base station may determine the last serving base station of the UE in inactive state based on the I-RNTI of the UE in inactive state.

Step 702: When receiving the RRC resume request, the current serving base station sends a retrieve UE context request (retrieve UE context request) to the last serving base station of the UE in inactive state.

Step 703: The last serving base station sends a retrieve UE context response (retrieve UE context response) to the current serving base station, where the retrieve UE context response carries a context of the UE in inactive state.

Step 704: The current serving base station determines that the UE is to transit from the inactive state to an RRC connected state.

Step 705: The current serving base station sends an address forwarding indication to the last serving base station, where the address forwarding indication carries an address of the current serving base station.

Step 705 is optional. A main function of step 705 is to prevent data of the inactive UE buffered in the last serving base station from being lost. The current serving base station provides the address of the current serving base station for the last serving base station, and the last serving base station forwards the buffered data of the UE in inactive state to the current serving base station based on the address.

Step 706: The current serving base station sends a path switch request (path switch request) to an access and mobility management function (access and mobility management function, AMF).

When receiving the path switch request, the AMF may change a base station that serves the UE in inactive state and that is stored in the AMF to the current serving base station. In other words, the current serving base station is subsequently used as the last serving base station of the UE in inactive state, and a core network subsequently forwards the service data of the UE in inactive state to a last serving base station side recorded in the AMF.

Step 707: The AMF sends a path switch request response (path switch request response) to the current serving base station.

Step 708: The current serving base station sends an RRC setup (setup) to the UE in inactive state.

When receiving the RRC setup, the UE transits from the inactive state to the RRC connected state.

Step 709: The current serving base station sends a UE context release (UE context release) request to the last serving base station, to request the last serving base station to release the context of the UE.

The last serving base station of the UE in inactive state is a base station that stores the context of the UE. The base station that serves the UE in inactive state and that is recorded in the AMF is the last serving base station of the UE. When the last serving base station of the UE in inactive state receives the service data of the UE in inactive state, the last serving base station sends RAN paging information to a base station in an RNA. When receiving the RAN paging information, the base station in the RNA broadcasts a paging message over a Uu air interface based on an information element carried in the RAN paging information. Alternatively, the foregoing process may be described as follows: The last serving base station determines, based on the RNA of the UE in inactive state, one or more base stations that send the paging message. The last serving base station sends the RAN paging information to the determined one or more base stations, and the one or more base stations broadcast the paging message in a corresponding cell based on the received RAN paging information. When the paging message received by the UE in inactive state includes an identifier of the UE, the UE in inactive state needs to initiate the RRC resume request in FIG. 7, to resume the RRC connected state and complete a paging response.

In this embodiment of this application, the UE in inactive state updates the RNA. Occasions for the UE in inactive state to update the RNA include the following.

First, the UE in inactive state may update the RNA in a mobile scenario.
1. The RNA is configured for the UE in inactive state by using a cell list. When the UE in inactive state moves to a new cell, if a cell identity of the new cell does not belong to the cell list, the UE in inactive state needs to initiate an RNA update process.
2. The RNA is configured for the UE in inactive state by using a RAN area configuration list. When the UE in inactive state moves to a new cell, if a TAC, an RAC, and/or the like of the new cell do/does not belong to the RAN area configuration list, the UE in inactive state needs to initiate an RNA update process.

Second, the UE in inactive state periodically updates the RNA.

For example, the UE in inactive state actively initiates an RNA update process at a specific interval. For example, when a T380 timer times out or expires, the UE in inactive state actively initiates the RNA update process. In addition, after the RNA is updated, the T380 timer is restarted. During running of the T380 timer, the UE in inactive state does not update the RNA.

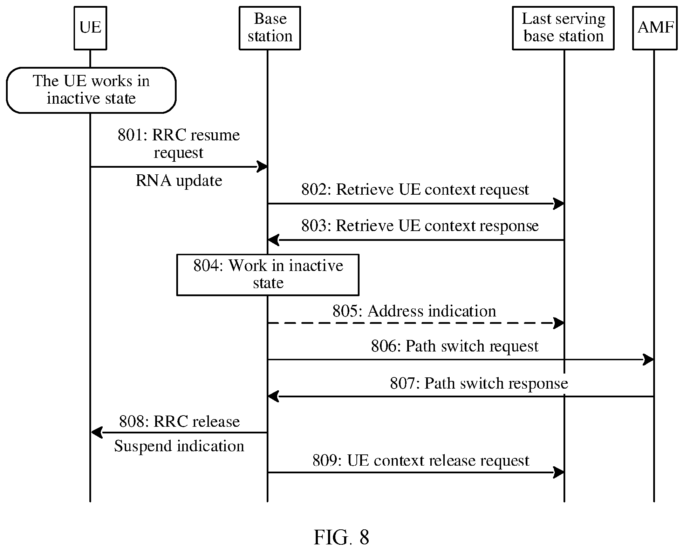

With reference to the accompanying drawings, the following describes the process in which the UE in inactive state updates the RNA. Refer to FIG. 8. The process includes at least the following steps.

Step 801: The UE in inactive state sends an RRC resume request to a current serving base station, where a resume cause value carried in the resume request is the RNA update.

Similar to step 701, the RRC resume request may carry an I-RNTI allocated by a last serving base station of the UE in inactive state to the UE in inactive state. The current serving base station may determine the last serving base station of the UE in inactive state based on the I-RNTI of the UE in inactive state.

Step 802: The UE in inactive state sends a retrieve UE context request to the last serving base station.

Step 803: The last serving base station sends a retrieve UE context response to the current serving base station.

Step 804: Because the cause value carried in the RRC resume request in step 801 is the RNA update, the current serving base station determines that the UE continues to work in inactive state.

Step 805: The current serving base station sends an address forwarding indication to the last serving base station, where the address forwarding indication carries an address of the current serving base station. Step 805 is optional.

Step 806: The current serving base station sends a path switch request to an AMF.

Step 807: The AMF sends a path switch request response to the current serving base station.

Step 808: The current serving base station sends an RRC release (release) to the UE in inactive state, where the RRC release carries a suspend indication (suspend indication), and the suspend indication indicates the UE to continue to work in inactive state.

The current serving base station may configure the RNA for the UE in inactive state. For a manner of configuring the RNA, refer to the foregoing descriptions. The RRC release message may carry the RNA configured by the current serving base station for the UE in inactive state.

Step 809: The current serving base station sends a UE context release request to the last serving base station, to request the last serving base station to release a context of the UE.

In a mobile IAB scenario of the 3GPP release 18 (release 18, R18), different from static deployment of an IAB node in the release 16 (release 16, R16) and release 17 (release 17, R17), the IAB node in R18 may be installed on a vehicle and move with the vehicle. In the R18 scenario, both the in-vehicle IAB node and an in-vehicle UE in inactive state move with the vehicle. The in-vehicle UE in inactive state accesses the in-vehicle IAB node. The in-vehicle IAB node may directly access an IAB donor node, or access the IAB donor node via another IAB node. In R18, a cell identity, a TAC, an RAC, and the like of the in-vehicle IAB node remain unchanged. Correspondingly, a cell identity, a TAC, an RAC, or the like broadcast by the in-vehicle IAB node remains unchanged. When the cell identity, the TAC, the RAC, or the like broadcast by the in-vehicle IAB node belongs to an RNA of the in-vehicle UE in inactive state, the UE is not triggered to update the RNA. In other words, within a time interval at which the in-vehicle UE in inactive state actively and periodically updates the RNA, the RNA of the in-vehicle UE in inactive state is fixed. In this scenario, the in-vehicle UE in inactive state and the in-vehicle IAB node move at a high speed with the vehicle, and the in-vehicle IAB node may frequently migrate between IAB donor nodes. When there is no Xn interface between a target IAB donor node to which migration is newly performed and a last serving IAB donor node of the in-vehicle UE in inactive state, the in-vehicle UE in inactive state may fail to be paged.

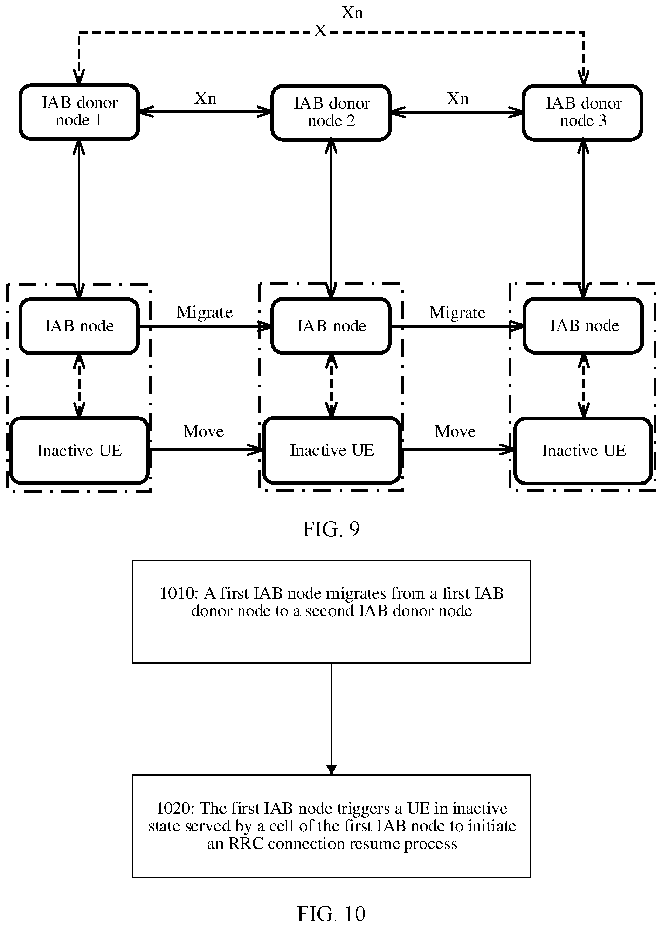

For example, as shown in FIG. 9, both the in-vehicle UE in inactive state and the in-vehicle IAB node are located in the vehicle, and move at the high speed with the vehicle. An IAB donor node 1 is used as a last serving base station of the UE in inactive state to configure an RNA for the in-vehicle UE in inactive state. Because the vehicle moves at a high speed, at the time interval at which the inactive UE actively and periodically updates the RNA, the donor node of the in-vehicle IAB node may switch from the IAB donor node 1 to an IAB donor node 2, and then switch from the IAB donor node 2 to an IAB donor node 3.

As the last serving base station of the in-vehicle UE in inactive state, when receiving service data of the in-vehicle UE in inactive state from a core network, the IAB donor node 1 may send RAN paging information to a corresponding base station based on an RNA configured by the IAB donor node 1 for the in-vehicle inactive UE. When the in-vehicle UE in inactive state and the in-vehicle IAB node access the IAB donor node 1, the IAB donor node 1 is used as a last serving donor node of the UE in inactive state, and can successfully obtain the in-vehicle UE in inactive state through paging. When the in-vehicle UE in inactive state and the in-vehicle IAB node migrate to the IAB donor node 2, because there is an Xn interface between the IAB donor node 1 and the IAB donor node 2, the IAB donor node 1 may send the RAN paging information to the IAB donor node 2 through the Xn interface, and the IAB donor node 2 broadcasts a paging message in a cell of the IAB donor node 2 based on the RAN paging information, and can also obtain the in-vehicle UE in inactive state through paging. When the in-vehicle UE in inactive state and the in-vehicle IAB node migrate to the IAB donor node 3, because there is no Xn interface between the IAB donor node 1 and the IAB donor node 3, the IAB donor node 1 cannot send the RAN paging information to the IAB donor node 3. As a result, the in-vehicle UE in inactive state fails to be paged.

### Embodiment 1

To resolve problems such as the paging failure of the in-vehicle UE in inactive state, in this embodiment of this application, when the in-vehicle IAB node migrates between the IAB donor nodes, the in-vehicle IAB node triggers a UE in inactive state served by a cell of the in-vehicle IAB node to initiate an RRC connection resume process. In the RRC resume process of the UE in inactive state, a context of the inactive UE may be migrated to an IAB donor node currently accessed by the in-vehicle IAB node. The IAB donor node currently accessed by the in-vehicle IAB node is used as a last serving donor node of the in-vehicle UE in inactive state, and the in-vehicle IAB node can successfully obtain the UE in inactive state through paging.

The following describes a communication method in an embodiment of this application with reference to the accompanying drawings. Refer to FIG. 10. The method includes the following steps.

In the following descriptions, an IAB node in an IAB network is referred to as a first IAB node. A child node of the first IAB node is a UE in inactive state. A parent node of the first IAB node is an IAB donor node; or a parent node of the first IAB node is another IAB node, and a parent node of the another IAB node is an IAB donor node. A quantity of other IAB nodes is one or more. This is not limited. In this embodiment of this application, it is assumed that the first IAB node migrates between IAB donor nodes. Specifically, it is assumed that the first IAB node migrates from a first IAB donor node to a second IAB donor node. The first IAB donor node may be referred to as a donor node before the migration of the first IAB node, a source donor node, or the like. This is not limited. The second IAB donor node may be referred to as a donor node after the migration of the first IAB node, a target donor node, or the like.

Step 1010: The first IAB node migrates from the first IAB donor node to the second IAB donor node.

As described above, the first IAB node may directly access the first IAB donor node or the second IAB donor node, or access the first IAB donor node or the second IAB donor node via another IAB node. This is not limited. The IAB donor node includes a CU and a DU. In this embodiment of this application, that the IAB node migrates between the donor nodes is inter-CU donor switching. In other words, the first IAB donor node and the second IAB donor node include different CUs. For example, step 1010 may be described as follows: The first IAB node migrates from a first donor-CU of the first IAB donor node to a second donor-CU of the second IAB donor node, where the first donor-CU is different from the second donor-CU. Optionally, the process of step 1010 may alternatively be described as follows: A DU part (namely, an IAB-DU) of the first IAB node sets up an F1 interface with the second donor-CU, and the second donor-CU activates a cell served by the IAB-DU. Optionally, the IAB-DU disconnects an F1 interface set up with the first donor-CU.

Step 1020: The first IAB node triggers the UE in inactive state served by the cell of the first IAB node to initiate an RRC connection resume process.

There are a plurality of implementations of step 1020. The following uses three examples for description, and this is not intended to limit this embodiment of this application.

### Example 1

The first IAB node sends first indication information to the UE in inactive state, where the first indication information indicates the UE in inactive state to update an RNA.

When receiving the first indication information, the UE in inactive state updates the RNA based on the indication of the first indication information. For a process of updating the RNA by the UE in inactive state, refer to FIG. 8. The first IAB node separately sends the first indication information to the UE in inactive state, or the first indication information is carried in another message. For example, the first indication information may be carried in a paging message of a Uu air interface, and the paging message may further include an identifier of the UE in inactive state. When receiving the paging message carrying the identifier of the UE in inactive state, the UE finds that the paging message is for the UE. In addition, if the paging message carries the first indication information for updating the RNA, the UE in inactive state updates the RNA. In the process of updating the RNA, the UE in inactive state migrates a context of the UE in inactive state from the first IAB donor node to the second IAB donor node. In addition, a last serving donor node that serves the UE in inactive state and that is recorded in an AMF is the second IAB donor node. Service data of the UE in inactive state is sent to the second IAB donor node. An RNA allocated by the second IAB donor node to the UE in inactive state includes an identity of a cell in which the UE in inactive state is located, a TAC of the cell in which the UE in inactive state is located, or an RAC of the cell in which the UE in inactive state is located. The second IAB donor node can successfully obtain the UE in inactive state through paging based on the RNA.

In this embodiment of this application, the first IAB node may actively trigger the UE in inactive state to update the RNA. For example, when the first IAB node migrates between the donor nodes, the first IAB node actively triggers the UE in inactive state to update the RNA. Alternatively, when receiving the indication information of the IAB donor node, the first IAB node triggers the UE in inactive state to update the RNA. This process may also be referred to as that the IAB donor node triggers the UE in inactive state to update the RNA. The IAB donor node may be the first IAB donor node before the migration or the second IAB donor node after the migration. That the donor node of the first IAB node after the migration: the second IAB donor node triggers the UE in inactive state to update the RNA is used as an example. A specific process includes the following.

The second IAB donor node sends the first indication information to the first IAB node. When receiving the first indication information, the first IAB node sends the first indication information to the UE in inactive state, to trigger the UE in inactive state to update the RNA. The second IAB donor node may directly send the first indication information to the first IAB node, or include the first indication information in an XnAP message. For example, the XnAP message is RAN paging information, another new XnAP message, or the like. This is not limited.

That the donor node of the first IAB node before the migration: the first IAB donor node triggers the UE in inactive state to update the RNA is used as an example. The process includes the following.

The first IAB donor node sends the first indication information to the second IAB donor node, and the second IAB donor node forwards the first indication information to the UE in inactive state via the first IAB node. For a process in which the second IAB donor node sends the first indication information to the UE in inactive state via the first IAB node, refer to the foregoing descriptions. In this example, the first IAB node may directly send the first indication information to the second IAB donor node, or the first indication information may be carried in an XnAP message. The XnAP message may be RAN paging information. This is not limited.

Based on the following scenario, the procedure shown in FIG. 10 is described by using an example.

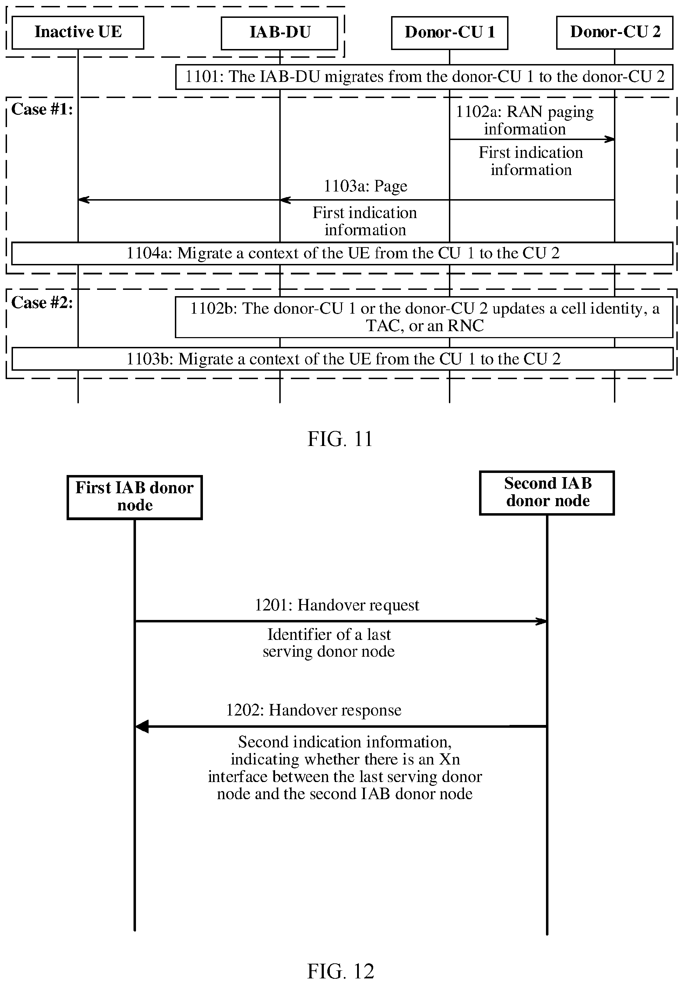

The first IAB node and the UE in inactive state are disposed on a vehicle, and the first IAB node and the UE in inactive state may be respectively referred to as an in-vehicle IAB node and an in-vehicle UE in inactive state. The first IAB node includes the IAB-DU and an IAB-MT, the first IAB donor node includes a donor-CU 1 and a donor-DU 1, and the second IAB donor node includes a donor-CU 2 and a donor-DU 2. Before the donor switching, there is an F1 interface between the IAB-DU and the donor-CU 1. After the donor switching, there is an F1 interface between the IAB-DU and the donor-CU 2. There is a Uu interface between the IAB-DU and the UE in inactive state. As shown in FIG. 11, a procedure is provided, and includes the following steps.

Step 1101: The IAB-DU migrates from the donor-CU 1 to the donor-CU 2.

Step 1102a: The donor-CU 1 sends RAN paging information to the donor-CU 2, where the RAN paging information carries first indication information.

The first indication information indicates the UE in inactive state to update an RNA, and the first indication information may also be referred to as indication information indicating that the RNA needs to be updated.

Step 1103a: The donor-CU 2 pages the UE in inactive state via the IAB-DU, to trigger the UE in inactive state to update the RNA.

For example, the donor-CU 2 sends the RAN paging information to the IAB-DU, where the RAN paging information carries the first indication information. When receiving the RAN paging information, the IAB-DU sends a paging message to the UE in inactive state, where the paging message carries the first indication information.

Step 1104a: The UE in inactive state initiates an RNA update process, and migrates a context of the UE in inactive state from the donor-CU 1 to the donor-CU 2.

### Example 2

The first IAB node sends a broadcast message to the UE in inactive state, where the broadcast message includes one or more of the following: an updated cell identity of the first IAB node, an updated TAC of the first IAB node, an updated RAC of the first IAB node, or the like. When an RNA is configured for the UE in inactive state by using a cell list, and the updated cell identity broadcast by the first IAB node does not belong to the cell list configured for the RNA, the UE in inactive state initiates an RNA update process. Alternatively, when an RNA is configured for the UE in inactive state by using a RAN area configuration list, and the updated TAC or RAC broadcast by the first IAB node does not belong to the RAN area configuration list, the UE in inactive state initiates an RNA update process.

In this embodiment of this application, the first IAB node may determine one or more of the following: the updated cell identity, the updated TAC, the updated RAC, or the like. Alternatively, the donor node determines the updated cell identity, the updated TAC, the updated RAN, and/or the like, and the donor node notifies the first IAB node of the updated cell identity, the updated TAC, the updated RAC, and/or the like. That the donor node of the first IAB node after the migration: the second IAB donor node determines the updated cell identity, the updated TAC, and/or the updated RAC of the first IAB node, and notifies the first IAB node is used as an example. The process is specifically as follows:
The second IAB donor node sends one or more of the following to the first IAB node: the updated cell identity of the first IAB node, the updated TAC of the first IAB node, or the updated RAC of the first IAB node.

The example in FIG. 11 is still used. As shown in FIG. 11, an embodiment of this application provides an implementation of the example 2, including the following steps.

Step 1101: The IAB-DU migrates from the donor-CU 1 to the donor-CU 2.

Step 1102b: The donor-CU 2 or the donor-CU 2 updates a cell identity, a TAC, an RACT, or the like broadcast by the IAB-DU. The updated cell identity, TAC, RAC, or the like does not belong to an RNA of the UE in inactive state. The IAB-DU is notified of the updated cell identity, the updated TAC, the updated RAC, or the like.

Step 1103b: The IAB-DU broadcasts the updated cell identity, TAC, RAC, or the like. The UE in inactive state listens to a broadcast message sent by the IAB-DU. When finding that the broadcast cell identity, TAC, RAC, or the like does not belong to the configured RNA, the UE in inactive state initiates an RNA update process, and migrates a context of the UE in inactive state from the donor-CU 1 to the donor-CU 2.

In the example 1 or example 2, it can be ensured that the in-vehicle UE in inactive state updates the RNA in time in a process in which the in-vehicle IAB node moves. This ensures communication between the UE and the network, and improves service experience of the UE.

### Example 3

The first IAB node sends a paging message to the UE in inactive state. In a scenario in which the first IAB node migrates between the IAB donor nodes, the first IAB node may directly send the paging message to the UE in inactive state. Alternatively, the donor node triggers the first IAB node to send the paging message. In a design, the donor node (namely, the first IAB donor node) of the first IAB node before the migration triggers the first IAB node to send the paging message. For example, the first IAB donor node sends paging information to the donor node (namely, the second IAB donor node) after the migration, where the paging information may be RNA paging information. The second IAB donor node forwards the RAN paging information to the first IAB node. When receiving the RAN paging information, the first IAB node sends the paging message to the UE in inactive state. Alternatively, in another design, the donor (namely, the second IAB donor node) of the first IAB node after the migration triggers the first IAB node to send the paging message. For example, the second IAB donor node sends RAN paging information to the first IAB node. When receiving the RAN paging information, the first IAB node sends the paging message to the UE in inactive state. When receiving the paging message, the UE in inactive state initiates RRC connection resume. Refer to FIG. 7.

A specific implementation of the example 3 is similar to the specific implementation of the example 1 in FIG. 11, and a difference lies in that in the case 1 in FIG. 11, the RAN paging information or the paging message no longer carries the first indication information.

In the example 3, when the donor node of the in-vehicle IAB node is switched, the in-vehicle IAB node sends a paging message to the UE in inactive state, to migrate a context of the UE in inactive state to the target donor node. This can ensure that the network successfully obtains the UE in inactive state through paging, and improve service experience of the UE.

### Embodiment 2

To resolve a problem that the paging failure of the UE in inactive state is caused by movement of the in-vehicle IAB node, an embodiment of this application further provides a solution, including: Before the IAB node migrates between donors, a source donor sends a handover request to a target donor, where the handover request carries identification information of a last serving donor of the UE in inactive state. The target donor may determine whether there is an Xn interface between the last serving donor of the UE in inactive state and the target donor. If there is no Xn interface between the target donor and the last serving donor, it indicates that the last serving donor cannot successfully send RAN paging information to the target donor through the Xn interface when receiving service data of the UE in inactive state. Therefore, in this embodiment of this application, in this case, a context of the UE in inactive state may be migrated from the last serving donor to the source donor. The source donor is used as a last serving donor of the UE in inactive state. There is an Xn interface between the source donor and the target donor to which the IAB node is to migrate, so that by sending the RAN paging information through different interfaces, the UE in inactive state can be successfully obtained through paging.

The following describes a communication method provided in an embodiment of this application with reference to the accompanying drawings. As shown in FIG. 12, the method includes the following steps.

In the following descriptions, an IAB node in an IAB network is referred to as a first IAB node. A source donor of the first IAB node is a first IAB node, and a target donor is a second IAB node. Before the first IAB node migrates from the source donor to the target donor, the method in this embodiment of this application is performed.

Step 1201: The first IAB donor node sends a handover request to the second IAB donor node, where the handover request includes an identifier of a last serving IAB donor node of a UE in inactive state in a cell of the first IAB node.

For example, the first IAB donor node may predict that the target donor to which the first IAB node is to migrate is the second IAB donor node. For example, based on a moving speed, a moving direction, or the like of the first IAB node, it is predicted that the first IAB node is to leave a service range of the first IAB donor node and enter a service range of the second IAB donor node. In this case, the first IAB donor node sends the handover request to the second IAB donor node.

Step 1202: The first IAB donor node receives a handover response from the second IAB donor node, where the handover response includes second indication information, the second indication information indicates whether there is an interface between the last serving donor of the UE in inactive state and the second IAB donor node, and the interface may be an Xn interface.

There is the interface between the last serving donor of the UE in inactive state and the target donor (namely, the second IAB donor node). This indicates that the last serving donor of the UE in inactive state may send RAN paging information to the second IAB donor node through the interface, the UE in inactive state can be successfully obtained through paging via the second IAB donor node, and no additional operation needs to be performed. Alternatively,
there is no interface between the last serving donor of the UE in inactive state and the target donor (namely, the second IAB donor node). This indicates that the UE in inactive state cannot be successfully obtained through paging. In this case, the source IAB donor node (namely, the first IAB donor node) may perform the following process:
Manner 1: The first IAB donor node triggers the UE in inactive state served by the cell of the first IAB node to initiate an RRC connection resume process. For a process of triggering RRC connection resume, refer to the embodiment 1.

For example, the first IAB donor node sends first indication information to the first IAB node, where the first indication information indicates the UE in inactive state to update an RNA, and the process of updating the RNA includes the RRC connection resume. When receiving the first indication information, the first IAB node sends the first indication information to the UE in inactive state. For details, refer to the example 1 in the embodiment 1. Alternatively,
the first IAB donor node sends one or more of the following to the first IAB node: an updated cell identity of the first IAB node, an updated TAC of the first IAB node, or an updated RAC of the first IAB node. The first IAB node broadcasts one or more of the foregoing in the cell, and the updated cell identity, the updated TAC, the updated RAC, or the like does not belong to the RNA configured for the UE in inactive state. When the UE in inactive state receives a broadcast message, and determines that the updated cell identity, the updated TAC, the updated RAC, or the like carried in the broadcast message does not belong to the RNA configured for the UE, the UE in inactive state initiates an RNA update process. For details, refer to the example 2 in the embodiment 1. Alternatively,
the first IAB donor node sends paging information to the first IAB node, where the paging information may be RAN paging information. The first IAB node sends a paging message to the UE in inactive state. When receiving the paging message, the UE in inactive state initiates the RRC connection resume process. For details, refer to the example 3 in the embodiment 1.

Manner 2: The last serving donor triggers the UE in inactive state to initiate an RRC connection resume process.

The source donor (namely, the first IAB donor node) sends a request message to the last serving donor, where the request message is used to request the last serving donor to trigger the UE in inactive state to initiate the RRC connection resume process. Optionally, the request message carries identification information of the first IAB node. For example, the last serving donor obtains the identification information of the first IAB node from the request message, and determines the first IAB node based on the identification information of the first IAB node. The last serving donor triggers, via the first IAB node, the UE in inactive state to initiate the RRC connection resume process.

For example, the last serving donor may send first indication information to the first IAB node, and the first IAB node sends the first indication information to the UE in inactive state, to trigger the UE in inactive state to initiate an RNA update process. For a specific process, refer to the example 1 in the embodiment 1. Alternatively,
the last serving donor determines one or more of the following of the first IAB node: an updated cell identity, an updated TAC, or an updated RAC. One or more of the foregoing may be determined by the last serving donor, or may be from the first IAB donor node. For example, the request message sent by the first IAB donor node to the last serving donor node may further carry one or more of the foregoing. The last serving donor may send one or more of the following to the first IAB node: the updated cell identity, the updated TAC, the updated RAC, or the like. The first IAB node broadcasts one or more of the following in the cell: the updated cell identity, the updated TAC, the updated RAC, or the like, to trigger the UE in inactive state to update an RNA. For a specific process, refer to the example 2 in the embodiment 1. Alternatively,
the last serving donor may send RAN paging information to the first IAB node, and the first IAB donor node sends a paging message to the UE in inactive state based on the RAN paging information, to trigger the UE in inactive state to initiate the RRC connection resume process. For a specific process, refer to the example 3 in the embodiment 1.

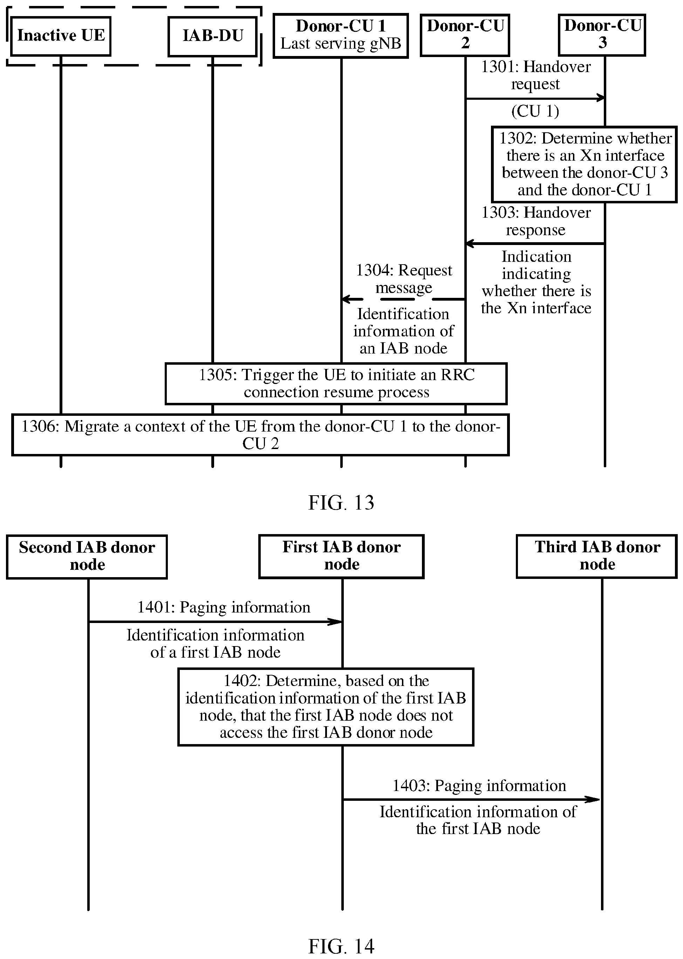

Based on the following scenario, the procedure shown in FIG. 12 is described by using an example. Refer to FIG. 13. The procedure includes the following steps.

The first IAB node and the UE in inactive state may be disposed on a vehicle, and the first IAB node includes an IAB-DU and an IAB-MT. A CU of the last serving donor of the UE in inactive state is referred to as a donor-CU 1. As the vehicle moves at a high speed, a donor-CU of the first IAB node switches from the donor-CU 1 to a donor-CU 2. There is an Xn interface between the donor-CU 1 and the CU 2. The donor-CU 2 predicts that the first IAB node is to migrate to a donor-CU 3 in the future, and there is no Xn interface between the donor-CU 3 and the donor-CU 1.

Step 1301: The donor-CU 2 sends a handover request to the donor-CU 3, where the handover request carries an identifier of the last serving donor of the UE in inactive state in a cell of the first IAB node, that is, carries an identifier of the donor-CU 1.

Optionally, the handover request may alternatively be another XnAP message or the like between donor nodes. This is not limited.

Step 1302: The donor-CU 3 determines whether there is an Xn interface between the CU 3 and the donor-CU 1.

Step 1303: The donor-CU 3 sends a handover response to the donor-CU 2, where the handover response carries indication information indicating whether there is the Xn interface between the donor node CU 3 and the donor-CU 1.

In this embodiment of this application, when receiving the handover response and determining that there is no Xn interface between the donor-CU 3 and the donor-CU 1, the donor-CU 2 may perform step 1305: The donor-CU 2 triggers the UE in inactive state to initiate an RRC connection resume process. The donor-CU 2 is a source donor of the IAB node. For this process, refer to the process in which the source donor (namely, the first donor node) triggers the UE in inactive state to initiate the RRC connection resume in FIG. 12. Alternatively, step 1304 may be performed, that is, the donor-CU 1 triggers the UE in inactive state to initiate an RRC connection resume process. For this process, refer to the process in which the last serving donor triggers the UE in inactive state to initiate the RRC connection resume in FIG. 12. Step 1304 and step 1305 do not coexist in one solution. An implementation may be selected from step 1304 and step 1305 based on different scenarios, requirements, configurations, or the like.

Step 1304: The donor-CU 2 sends a request message to the donor-CU 1, where the request message is used to request the donor-CU 1 to trigger the UE in inactive state of the IAB node to initiate the RRC connection resume process.

Optionally, the request message carries identification information of the first IAB node, and the identification information may uniquely identify the first IAB node. The identification information may be an identifier of the first IAB node, an identifier of a DU in the first IAB node, an identity of the cell of the first IAB node, or the like. This is not limited. The donor-CU 1 may determine the first IAB node based on the identification information, to trigger the UE in inactive state in the cell of the first IAB node to initiate the RRC connection resume process.

Step 1305: The donor-CU 2 triggers the UE in inactive state of the IAB node to initiate the RRC connection resume process.

Step 1306: Migrate a context of the UE in inactive state from the donor-CU 1 to the donor-CU 2.

It may be understood that in this embodiment of this application, there is at least one UE in inactive state in the cell of the IAB node. The handover request sent by the donor-CU 2 to the donor-CU 3 may carry a list, and the list includes a last serving donor of each of the at least one UE in inactive state. The donor-CU 3 determines and indicates, to the donor-CU 2, whether there are Xn interfaces between the donor-CU 3 and all last serving donors in the list. A UE in inactive state corresponding to a last serving donor that has no interface may be triggered to initiate an RRC connection resume process. A UE in inactive state whose last serving donor has an interface with the donor-CU 3 may not be triggered to initiate an RRC connection resume process.

In this embodiment of this application, it can be ensured that the in-vehicle UE in inactive state initiates the RRC connection resume in time in a process in which the IAB node moves with the vehicle. This ensures communication between the UE and a network, and improves service experience of the UE.

### Embodiment 3

An embodiment of this application further provides a solution, including: When receiving a RAN paging message, each IAB donor node forwards the RNA paging information to another IAB donor node that has an Xn interface with the IAB donor node. In the foregoing multi-hop forwarding manner of the RAN paging information, even if there is no Xn interface between a current serving donor node and a last serving donor node, the RAN paging information may be forwarded to the current donor node via another donor node, to successfully obtain a UE in inactive state through paging.

The following describes a communication method provided in this embodiment of this application with reference to the accompanying drawings. The communication method includes at least the following steps.

An IAB network includes a first IAB donor node, a second IAB donor node, a third IAB donor node, and a first IAB node. The first IAB donor node, the second IAB donor node, and the third IAB donor node are any donor nodes in the IAB network, and the three donor nodes are different from each other. In the following descriptions, it is assumed that there is an interface between the first IAB donor node and the second IAB donor node, there is an interface between the second IAB donor node and the third IAB donor node, and there is no interface between the first IAB donor node and the third IAB donor node.

Step 1401: The first IAB donor node receives paging information from the second IAB donor node, where the paging information carries identification information of the first IAB node.

Optionally, the paging information may be RAN paging information. The identification information of the first IAB node may be information that can uniquely identify the first IAB node, for example, an identifier of the first IAB node, an identifier of a DU in the first IAB node, or an identity of a cell of the first IAB node. This is not limited.

Step 1402: The first IAB donor node determines, based on the identification information of the first IAB node, that the first IAB node does not access the first IAB donor node.

Step 1403: The first IAB donor node sends, to the third IAB donor node, the paging information that carries the identification information of the first IAB node.

In this embodiment of this application, multi-hop sending of the paging information may be implemented. Implementations of step 1403 include the following.

Manner 1: The first IAB donor node determines, based on the identification information of the first IAB node, that the first IAB node is located in a service range of the third IAB donor. In this case, the first IAB node may directly forward the paging information to the third IAB donor node. When receiving the paging information, the third IAB donor node obtains the identification information of the first IAB node carried in the paging information. The third IAB donor node determines the first IAB node based on the identification information. The third IAB donor node sends the paging information to the first IAB node, and the first IAB node determines a paging message based on the paging information, and sends the paging message to the UE in inactive state.

It should be noted that, in the manner 1, the first IAB node may migrate from the first IAB donor to the third IAB donor, and there is an interface between the first IAB donor and the third IAB donor. Therefore, the first IAB node may determine, based on the identification information of the first IAB node, that the first IAB node is currently located in the service range of the third IAB donor node, and the first IAB donor node directly forwards the paging information to the third IAB donor node, to reduce overheads of the paging information.

Manner 2: The first IAB donor node sends the paging information to an IAB donor node that has an interface with the first IAB donor node, where the IAB donor node that has the interface with the first IAB donor node includes the third IAB donor node. In other words, the first IAB donor node may forward the paging information to all donor nodes that have interfaces with the first IAB donor node, and all the donor nodes that have the interfaces include at least the third IAB donor node.

In the manner 2, when receiving the paging information of the first IAB node, each IAB donor node forwards the paging information to all IAB donor nodes that have interfaces, to successfully obtain the UE in inactive state through paging.

Optionally, when the first IAB donor node determines, based on the identification information of the first IAB node, that the first IAB node accesses the first IAB donor node, the first IAB donor node sends the paging information to the first IAB node.

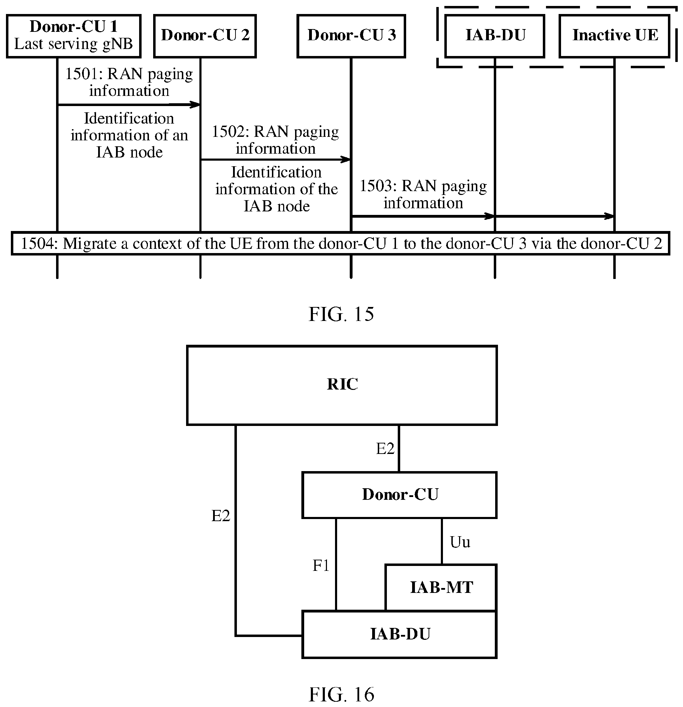

For the following scenario, the method shown in FIG. 14 is described by using an example. Refer to FIG. 15. The method includes the following steps.

The first IAB node and the UE in inactive state in the IAB network are located in a vehicle, and move at a high speed with the vehicle. A donor node 1 is used as a last serving donor of the UE in inactive state. As the first IAB node moves at the high speed with the vehicle, an accessed IAB donor node switches from a donor-CU 1 in the donor node 1 to a donor-CU 2 in a donor node 2, and then switches from the donor-CU 2 to a donor-CU 3 in a donor node 3.

Step 1501: As the last serving donor of the UE in inactive state, the donor-CU 1 in the donor node 1 sends RAN paging information to the donor-CU 2 when receiving service data of the UE in inactive state in a core network, where the RAN paging information carries information that uniquely identifies the first IAB node. For example, the information may be an identifier of the first IAB node, an identifier of a DU in the first IAB node, an identity of a cell of the first IAB node, or the like. This is not limited.

Step 1502: When receiving the RAN paging information, the donor-CU 2 forwards the RAN paging information to a donor node that has an Xn interface with the donor-CU 2, where the donor node that has the Xn interface includes the donor node 3.

That is, in step 1502, the CU 2 forwards the RAN paging information to at least the donor-CU 3 in the donor node 3.

Step 1503: When obtaining identification information of the first IAB node from the RAN paging information, the CU 3 determines that the first IAB is in a service range of the CU 3, and forwards the RAN paging information to the first IAB node.

The first IAB node determines a paging message based on the RAN paging information. The first IAB node sends the paging message to the UE in inactive state, to page the UE in inactive state. When the UE in inactive state receives the paging message, the UE in inactive state initiates the RRC connection resume process shown in FIG. 7. In the RRC connection resume process, a context of the UE is migrated from the donor-CU 1 to the donor-CU 3. Because there is no Xn interface between the donor-CU 1 and the donor-CU 3, the context of the UE may be specifically migrated from the donor-CU 1 to the donor-CU 3 via the donor-CU 2. This is not limited.

Step 1504: Migrate the context of the UE in inactive state from the donor-CU 1 to the donor-CU 3 via the donor-CU 2.

According to the foregoing design, in an IAB mobile scenario, multi-hop paging is performed, so that the network can obtain the in-vehicle UE in inactive state through paging, to ensure a connection between the UE and the network, and improve service experience of the UE.

### Embodiment 4

An embodiment of this application provides an open radio access network (open radio access network, O-RAN) architecture, and provides, based on the O-RAN architecture, a solution for paging an in-vehicle UE in inactive state. As shown in FIG. 16, the O-RAN architecture includes the following.

Access network intelligent controller (RAN intelligent controller, RIC): Configured to collect network information and execute an optimization task. The RIC is an intelligent controller in the O-RAN architecture. There is an E2 interface between the RIC and a donor-CU, and there is also an E2 interface between the RIC and an IAB-DU. The RIC may directly control the IAB-DU through the E2 interface. Alternatively, the RIC controls the IAB-DU via the donor-CU. The RIC may be a near-real-time RIC or a non-real-time RIC. This is not limited.

Donor-CU: A function of the donor-CU is similar to that of the foregoing CU. Refer to the foregoing descriptions.

IAB-DU: A function of the IAB-DU is similar to that of the foregoing DU. There is an F1 interface between the IAB-DU and the donor-CU.

IAB-MT: The IAB-MT is used as a child node of the donor-CU. For a specific function, refer to the foregoing descriptions. There is a Uu interface between the IAB-MT and the donor-CU.

In this embodiment of this application, the following solution is provided based on the O-RAN architecture: When there is no Xn interface between a last serving donor of the UE in inactive state and a current serving donor node, the last serving donor sends RAN paging information to the RIC. The RIC directly forwards the RAN paging information to the IAB-DU in an IAB node through the E2 interface. The IAB-DU sends a paging message to the UE in inactive state in a service range of the IAB-DU based on the RAN paging information. Alternatively, the RIC sends RAN paging information to the IAB-DU via a CU in a current serving donor node (referred to as a donor-CU for short). This is not limited.

The method specifically includes: The RIC receives paging information from a first IAB donor node, where the paging information may be the RAN paging information. The first IAB donor node is a last serving donor of a UE in inactive state served by a cell of a first IAB node. The RIC sends the RAN paging information to the first IAB node.

For example, the RIC may directly send the paging information to the first IAB node through the E2 interface. Alternatively, the RIC may send the paging information to a second IAB donor node through the E2 interface, and the second IAB donor node forwards the paging information to the first IAB node. The paging information may be the RAN paging information. When receiving the RAN paging information, the first IAB node sends a paging message for the UE in inactive state over a Uu air interface.

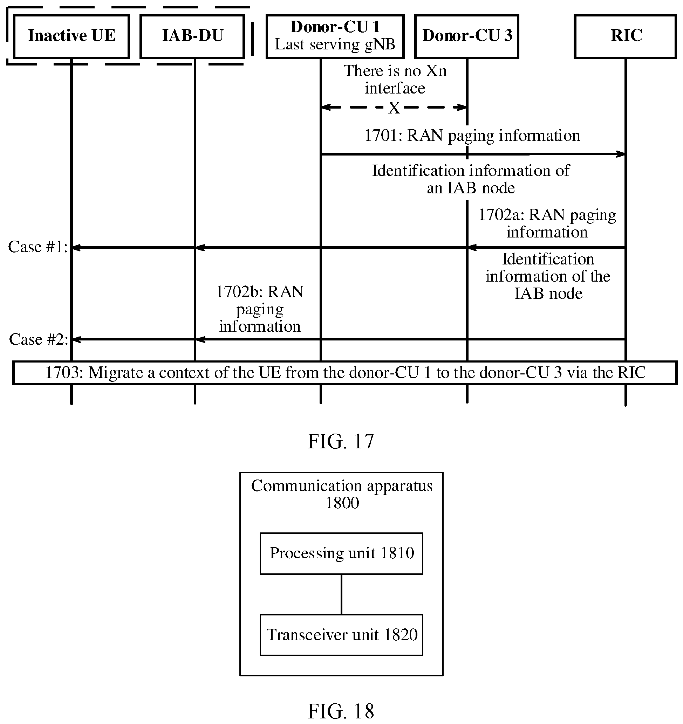

The following describes the foregoing method with reference to the following scenario. As shown in FIG. 17, the method includes at least the following steps.

That the in-vehicle UE in inactive state and the in-vehicle IAB node are located in a moving vehicle, a CU in the last serving donor of the UE in inactive state is referred to as a donor-CU 1, a CU in the current serving donor node of the in-vehicle IAB node is referred to as a donor-CU 3, and there is no Xn interface between the donor-CU 1 and the donor-CU 3 is used as an example.

Step 1701: The donor-CU 1 sends RAN paging information to the RIC.

If the donor-CU 1 cannot obtain the UE in inactive state through paging by using the RAN paging information, the CU 1 may perform step 1701, to send the RAN paging information to the RIC through the E2 interface. Optionally, the RAN paging information may include identification information of an IAB node corresponding to the UE in inactive state, and the identification information may uniquely identify the IAB node. Specifically, the identification information may be an identifier of the IAB node, an identifier of a DU in the IAB node, an identity of a cell of the IAB node, or the like.

The RIC determines the corresponding IAB node based on the identification information carried in the RAN paging information, and pages the UE in inactive state served by the cell served by the IAB node. Specifically, the following manners are included.

Step 1702a: The RIC forwards the RAN paging information to a donor-CU that has the E2 interface. The donor-CU that has the E2 interface with the RIC includes the donor-CU 3. The donor-CU 3 receives the RAN paging information, and obtains the identification information of the IAB node from the RAN paging information. The donor-CU 3 forwards the RAN paging information to a determined IAB node. Specifically, the donor-CU 3 forwards the RAN paging information to a DU part (namely, an IAB-DU) of the determined IAB node. The IAB-DU sends a paging message to the UE in inactive state. The foregoing process may be referred to as that the donor-CU 3 pages the UE in inactive state via the IAB-DU.

Step 1702b: The RIC determines the IAB node based on the identification information carried in the RAN paging information. The RIC directly forwards the RAN paging information to a DU part of the determined IAB node through the E2 interface, and pages the UE in inactive state via the IAB-DU. Alternatively, the RIC forwards the RAN paging information to a DU that has the E2 interface. When receiving the RAN paging information, the IAB-DU obtains the identifier in the RAN paging information, and determines whether the identifier carried in the RAN paging information matches an identifier of the IAB-DU. If the identifier matches the identifier of the IAB-DU, the IAB-DU pages the UE in inactive state served by the cell of the IAB node.

It may be understood that, in step 1702a, the RIC forwards the RAN paging message to the donor-CU 3, and then the donor-CU 3 sends the RAN paging message to the IAB-DU. In step 1702b, the RIC directly sends the RAN paging information to the IAB-DU through the E2 interface. Either step 1702a or step 1702b may exist based on different scenarios, configurations, requirements, or the like.

Step 1703: Migrate a context of the UE in inactive state from the donor-CU 1 to the donor-CU 3. Because there is no Xn interface between the donor-CU 1 and the donor-CU 3, the context of the UE in inactive state is migrated from the donor-CU 1 to the donor-CU 3 via the RIC.

According to the foregoing design, in a mobile IAB scenario of the O-RAN architecture, a network can obtain the in-vehicle UE in inactive state through paging, to ensure a connection between the UE and the network, and improve service experience of the UE.

As described above, the IAB donor node, for example, the donor-CU, may trigger, via the IAB-DU, the UE in inactive state to update the RNA. In embodiments of this application, the donor-CU may adjust, based on the moving speed of the vehicle, a time interval at which the UE in inactive state updates the RNA. For example, when the vehicle moves at a high speed, the donor-CU may trigger the UE in inactive state to update the RNA at a short periodicity or time interval. Alternatively, when the vehicle moves at a low speed, the donor-CU may trigger the UE in inactive state to update the RNA at a long periodicity or time interval. It may be understood that this solution may be combined with the process in which the donor-CU triggers the UE in inactive state to update the RNA in the embodiment 1, the embodiment 2, or the embodiment 3. In other words, in the embodiment 1, the embodiment 2, or the embodiment 3, when the donor-CU triggers the UE in inactive state to update the RNA, the donor-CU may adjust, based on the moving speed of the vehicle, the time interval, the periodicity, or the like for triggering the UE in inactive state to update the RNA.

As described above, the UE in inactive state may periodically update the RNA. In embodiments of this application, the UE in inactive state may adjust, based on the moving speed of the vehicle, the time interval or the periodicity for updating the RNA. Similarly, when the vehicle moves at the high speed, the UE in inactive state may update the RNA at the short periodicity or the short time interval. In other words, the UE in inactive state updates the RNA at the short periodicity. Alternatively, when the vehicle moves at the low speed, the UE in inactive state may update the RNA at the long periodicity or the long time interval. In other words, the UE in inactive state updates the RNA at the long periodicity.

It may be understood that, to implement functions in the foregoing embodiments, the first IAB node, the donor node, the terminal, and the like include corresponding hardware structures and/or software modules for performing the functions. A person skilled in the art should be easily aware that, in this application, units and method steps in the examples described with reference to embodiments disclosed in this application can be implemented by hardware or a combination of hardware and computer software. Whether a function is performed by hardware or hardware driven by a computer depends on a particular application scenario and a design constraint condition of the technical solutions.

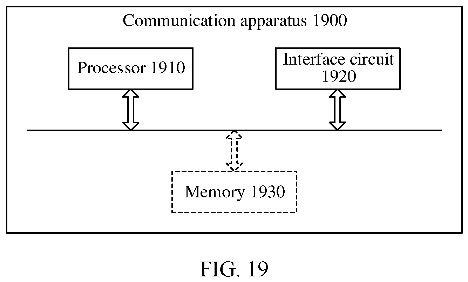

FIG. 18 and FIG. 19 are diagrams of structures of communication apparatuses according to embodiments of this application. These communication apparatuses may be configured to implement functions of the first IAB node, the donor node, or the terminal in the foregoing method embodiments. Therefore, beneficial effects of the foregoing method embodiments can also be achieved. In embodiments of this application, the communication apparatuses each may be a first IAB node, a donor node, a terminal, or the like, or may be a module (for example, a chip) used in the first IAB node, the donor node, or the terminal.

As shown in FIG. 18, a communication apparatus 1800 includes a processing unit 1810 and a transceiver unit 1820. The communication apparatus 1800 is configured to implement functions of the first IAB node, the donor node, or the terminal in the embodiment 1, the embodiment 2, the embodiment 3, or the embodiment 4.

When the communication apparatus 1800 is configured to implement the functions of the first IAB node in the embodiment 1, the processing unit 1810 determines that the first IAB node migrates from a first IAB donor node to a second IAB donor node; and the processing unit 1810 triggers a terminal in inactive state served by a cell of the first IAB node to initiate a radio resource control RRC connection resume process.

In a design, that the processing unit 1810 triggers a terminal in inactive state served by a cell of the first IAB node to initiate an RRC connection resume process includes: controlling the transceiver unit 1820 to send first indication information to the terminal in inactive state, where the first indication information indicates the terminal in inactive state to update a radio access network-based notification area RNA.

In a design, before the first IAB node sends the first indication information to the terminal in inactive state, the transceiver unit 1820 is further configured to receive the first indication information from the second IAB donor node.

In a design, that the processing unit 1810 triggers a terminal in inactive state served by a cell of the first IAB node to initiate an RRC connection resume process includes: controlling the transceiver unit 1820 to send a broadcast message to the terminal in inactive state, where the broadcast message includes one or more of the following: an updated cell identity of the first IAB node, an updated tracking area code TAC of the first IAB node, or an updated radio access network-based notification area code RAC of the first IAB node.

In a design, before the first IAB node sends the broadcast message to the terminal in inactive state, the processing unit 1810 is further configured to update one or more of the following: a cell identity of the first IAB node, a TAC of the first IAB node, or an RAC of the first IAB node.

In a design, before the first IAB node sends the broadcast message to the terminal in inactive state, the transceiver unit 1820 is further configured to receive one or more of the following from the second IAB donor node: the updated cell identity of the first IAB node, the updated TAC of the first IAB node, or the updated RAC of the first IAB node.

In a design, that the processing unit 1810 triggers a terminal in inactive state served by a cell of the first IAB node to initiate an RRC connection resume process includes: controlling the transceiver unit 1820 to send a paging message to the terminal in inactive state.

In a design, before the first IAB node sends the paging message to the terminal in inactive state, the transceiver unit 1820 is further configured to receive paging information from the second IAB donor node.

When the communication apparatus 1800 is configured to implement the functions of the terminal in the embodiment 1, the transceiver unit 1820 is configured to receive first indication information from a first integrated access and backhaul IAB node, where the first indication information indicates the terminal in inactive state to update a radio access network-based notification area RNA; and the processing unit 1810 is configured to initiate an RNA update process based on the first indication information.

When the communication apparatus 1800 is configured to implement the functions of the first IAB node in the embodiment 1, the transceiver unit 1820 is configured to send first indication information to a second IAB donor node, where the first indication information indicates a terminal in inactive state served by a cell of a first IAB node to update a radio access network-based notification area RNA. The first IAB donor node is a source donor of the first IAB node, and the second IAB donor node is a target donor of the first IAB node.

In a design, the transceiver unit 1820 is further configured to send identification information of the first IAB node to the second IAB donor node.

When the communication apparatus 1800 is configured to implement the functions of the first IAB node in the embodiment 1, the transceiver unit 1820 is configured to receive first indication information from a first IAB donor node, where the first indication information indicates a terminal in inactive state served by a cell of a first IAB node to update a radio access network-based notification area RNA, where a source donor of the first IAB node is the first IAB donor node, and a target donor of the first IAB is the second IAB donor node. The second IAB donor node sends the first indication information to the first IAB node.

In a design, before the second IAB donor node sends the first indication information to the first IAB node, the transceiver unit 1820 further includes: The transceiver unit 1820 is configured to receive identification information of the first IAB node from the first IAB donor node, and the processing unit 1810 is configured to determine the first IAB node based on the identification information of the first IAB node.

When the communication apparatus 1800 is configured to implement the functions of the first IAB donor node in the embodiment 1, the transceiver unit 1820 is configured to send paging information to a second IAB donor node. The first IAB donor node is a source donor of a first IAB node, and the second IAB donor node is a target donor of the first IAB node.

In a design, the paging information includes identification information of the first IAB node.

When the communication apparatus 1800 is configured to implement the functions of the second IAB donor node in the embodiment 1, the transceiver unit 1820 is configured to: receive paging information from a first IAB donor node, and send the paging information to a first IAB node.

A source donor of the first IAB node is the first IAB donor node, and a target donor of the first IAB node is the second IAB donor node.

In a design, the paging information includes identification information of the first IAB node. Before the transceiver unit 1820 sends the paging information to the first IAB node, the processing unit 1810 is configured to determine the first IAB node based on the identification information of the first IAB node.

When the communication apparatus 1800 is configured to implement the functions of the first IAB donor node in the embodiment 2, the transceiver unit 1820 is configured to send a handover request to a second IAB donor node, where the handover request includes an identifier of a last serving donor of a terminal in inactive state served by a cell of a first IAB node, the first IAB donor node is a source donor of the first IAB node, and the second IAB donor node is a target donor of the first IAB node. The transceiver unit 1820 is further configured to receive a handover response from the second IAB donor node, where the handover response includes second indication information, and the second indication information indicates whether there is an interface between the last serving donor of the terminal in inactive state and the second IAB donor node.

In a design, when there is no interface between the last serving donor and the second IAB donor node, the processing unit 1810 is further configured to trigger the terminal in inactive state served by the cell of the first IAB node to initiate a radio resource control RRC connection resume process.

In a design, that the processing unit 1810 triggers the terminal in inactive state served by the cell of the first IAB node to initiate an RRC connection resume process includes: controlling the transceiver unit 1820 to send first indication information to the first IAB node, where the first indication information indicates the terminal in inactive state to update a radio access network-based notification area RNA.

In a design, that the processing unit 1810 triggers the terminal in inactive state served by the cell of the first IAB node to initiate an RRC connection resume process includes: controlling the transceiver unit 1820 to send one or more of the following to the first IAB node: an updated cell identity of the first IAB node, an updated tracking area code TAC of the first IAB node, or an updated radio access network-based notification area code RAC of the first IAB node.

In a design, that the processing unit 1810 triggers the terminal in inactive state served by the cell of the first IAB node to initiate an RRC connection resume process includes: controlling the transceiver unit 1820 to send paging information to the first IAB node.

In a design, when there is no interface between the last serving donor and the second IAB donor node, the transceiver unit 1820 is further configured to send a request message to the last serving donor of the terminal in inactive state, where the request message is used to request the last serving donor of the terminal in inactive state to trigger the terminal in inactive state to initiate an RRC connection resume process.

In a design, the request message includes identification information of the first IAB node.

When the communication apparatus 1800 is configured to implement the functions of the second IAB donor node in the embodiment 2, the transceiver unit 1820 is configured to receive a handover request from a first IAB donor node, where the handover request includes an identifier of a last serving donor of a terminal in inactive state served by a cell of a first IAB node, a source donor of the first IAB node is the first IAB donor node, and a target donor of the first IAB node is the second IAB donor node. The transceiver unit 1820 is further configured to send a handover response to the first IAB donor node, where the handover response includes second indication information, and the second indication information indicates whether there is an interface between the last serving donor of the terminal in inactive state and the second IAB donor node.

When the communication apparatus 1800 is configured to implement the functions of the last serving donor node in the embodiment 2, the transceiver unit 1820 is configured to receive a request message from a first IAB donor node, where the request message is used to request the last serving donor to trigger a terminal in inactive state to initiate a radio resource control RRC connection resume process, and the first IAB donor node is a source donor of a first IAB node; and the processing unit 1810 is configured to trigger the terminal in inactive state to initiate the radio resource control RRC connection resume process.

In a design, the request message includes identification information of the first IAB node.

In a design, before the last serving donor triggers the terminal in inactive state to initiate the RRC connection resume process, the processing unit 1810 is further configured to: determine the first IAB node based on the identification information of the first IAB node; and trigger, via the first IAB node, the terminal in inactive state to initiate the RRC connection resume process.

In a design, that the processing unit 1810 triggers the terminal in inactive state to initiate the RRC connection resume process includes: controlling the transceiver unit 1820 to send first indication information to the first IAB node, where the first indication information indicates the terminal in inactive state to update a radio access network-based notification area RNA.

In a design, that the processing unit 1810 triggers the terminal in inactive state to initiate the RRC connection resume process includes: controlling the transceiver unit 1820 to send one or more of the following to the first IAB node: an updated cell identity of the first IAB node, an updated tracking area code TAC of the first IAB node, or an updated radio access network-based notification area code RAC of the first IAB node.

In a design, that the processing unit 1810 triggers the terminal in inactive state to initiate the RRC connection resume process includes: controlling the transceiver unit 1820 to send paging information to the first IAB node.

When the communication apparatus 1800 is configured to implement the functions of the first IAB node in the embodiment 2, the transceiver unit 1820 is configured to receive first indication information from an IAB donor node, where the first indication information indicates a terminal in inactive state served by a cell of the first IAB node to initiate a radio resource control RRC connection resume process, and the donor node is a source IAB donor node of the first IAB node or a last serving donor of the terminal in inactive state. The transceiver unit 1820 is further configured to send the first indication information to the terminal in inactive state.

When the communication apparatus 1800 is configured to implement the functions of the first IAB node in the embodiment 2, the transceiver unit 1820 is configured to receive one or more of the following from a donor node: an updated cell identity of the first IAB node, an updated tracking area code TAC of the first IAB node, or an updated radio access network-based notification area code RAC of the first IAB node. The donor node is a source donor node of the first IAB node or a last serving donor of a terminal in inactive state. The transceiver unit 1820 is further configured to send a broadcast message to the terminal in inactive state, where the broadcast message includes one or more of the following: the updated cell identity of the first IAB node, the updated TAC of the first IAB node, or the updated RAC of the first IAB node.

When the communication apparatus 1800 is configured to implement the functions of the first IAB node in the embodiment 2, the transceiver unit 1820 is configured to receive paging information from a donor node, where the donor node is a source donor node of the first IAB node or a last serving donor of a terminal in inactive state served by a cell of the first IAB node; and the processing unit 1810 is configured to send a paging message to the terminal in inactive state based on the paging information, where the paging message is used to trigger the terminal in inactive state to initiate a radio resource control RRC connection resume process.

When the communication apparatus 1800 is configured to implement the functions of the first IAB donor node in the embodiment 3, the transceiver unit 1820 is configured to receive paging information from a second IAB donor node, where the paging information carries identification information of a first IAB node; the processing unit 1810 is configured to determine, based on the identification information of the first IAB node, that the first IAB node does not access the first IAB donor node; and the transceiver unit 1820 is further configured to send the paging information to a third IAB donor node.

In a design, before the transceiver unit 1820 sends the paging information to the third IAB donor node, the processing unit 1810 is further configured to determine the third IAB donor node based on the identification information of the first IAB node.

In a design, that the transceiver unit 1820 sends the paging information to a third IAB donor node includes: sending the paging information to an IAB donor node that has an interface with the first IAB donor node, where the IAB donor node that has the interface with the first IAB donor node includes the third IAB donor node.

In a design, the processing unit 1810 is further configured to determine, based on the identification information of the first IAB node, that the first IAB node accesses the first IAB donor node. The transceiver unit 1820 is further configured to send the paging information to the first IAB node.

When the communication apparatus 1800 is configured to implement the functions of the RIC in the embodiment 4, the transceiver unit 1820 is configured to: receive paging information from a first integrated access and backhaul IAB donor; and send the paging message to a second IAB donor or a first IAB node. The first IAB donor is a last serving donor of a terminal in inactive state served by a cell of the first IAB node, and the second IAB donor is a current serving donor of the terminal in inactive state served by the cell of the first IAB node.

In a design, the paging information includes identification information of the first IAB node.

In a design, before the transceiver unit 1820 sends the paging information to the second IAB donor or the first IAB node, the processing unit 1810 is further configured to determine the second IAB donor or the first IAB node based on the identification information of the first IAB node.

In a design, that the transceiver unit 1820 sends the paging information to a second IAB donor or a first IAB node includes: sending the paging information to an IAB donor that has an interface with the RIC, where the IAB donor that has the interface with the RIC includes the second IAB donor; or sending the paging information to an IAB node that has an interface with the RIC, where the IAB node that has the interface with the RIC includes the first IAB node.

When the communication apparatus 1800 is configured to implement the functions of the second IAB donor node in the embodiment 4, the transceiver unit 1820 is configured to receive paging information from an access network intelligent controller RIC, where the paging information includes identification information of a first IAB node, and the second IAB donor is a current serving donor of a terminal in inactive state served by a cell of the first IAB node; the processing unit 1810 is configured to determine the first IAB node based on the identification information of the first IAB node; and the transceiver unit 1820 is further configured to send the paging information to the first IAB node, where the paging information is used to page the terminal in inactive state served by the cell of the first IAB node.

When the communication apparatus 1800 is configured to implement the functions of the first IAB node in the embodiment 4, the transceiver unit 1820 is configured to receive paging information from an access network intelligent controller RIC, where the paging information includes identification information of the first IAB node; and the processing unit 1810 is configured to send, based on the paging information, a paging message to a terminal in inactive state served by a cell of the first IAB node.

For more detailed descriptions of the processing unit 1810 and the transceiver unit 1820, directly refer to the related descriptions in the foregoing method embodiment 1, embodiment 2, embodiment 3, or embodiment 4. Details are not described herein again.

As shown in FIG. 19, a communication apparatus 1900 includes a processor 1910 and an interface circuit 1920. The processor 1910 and the interface circuit 1920 are coupled to each other. It may be understood that the interface circuit 1920 may be a transceiver or an input/output interface. Optionally, the communication apparatus 1900 may further include a memory 1930, configured to: store instructions executed by the processor 1910, store input data needed by the processor 1910 to run instructions, or store data generated by running instructions by the processor 1910.

When the communication apparatus 1900 is configured to implement the method shown in the embodiment 1, the embodiment 2, the embodiment 3, or the embodiment 4, the processor 1910 is configured to implement functions of the processing unit 1810, and the interface circuit 1920 is configured to implement functions of the transceiver unit 1820.

When the communication apparatus is a chip used in a terminal, the chip in the terminal implements functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to a base station.

When the communication apparatus is a module used in an IAB node, the module in the IAB node implements functions of the IAB node in the foregoing method embodiments. The module in the IAB node receives information from another module (for example, a radio frequency module or an antenna) in the IAB node, where the information is sent to the IAB node. Alternatively, the module in the IAB node sends information to another module (for example, a radio frequency module or an antenna) in the IAB node, where the information is sent by the IAB node to a terminal or an IAB donor node. The module in the IAB node herein may be a baseband chip of the IAB node, or may be a DU or another module. The DU herein may be a DU in an open radio access network (open radio access network, O-RAN) architecture.

When the communication apparatus is a module used in an IAB donor node, the module in the IAB donor node implements functions of the IAB donor node in the foregoing method embodiments. The module in the IAB donor node receives information from another module (for example, a radio frequency module or an antenna) in the IAB donor node, where the information is sent to the IAB donor node. Alternatively, the module in the IAB donor node sends information to another module (for example, a radio frequency module or an antenna) in the IAB donor node, where the information is sent by the IAB donor node to a terminal or an IAB node. The module in the IAB donor node herein may be a baseband chip of the IAB donor node, or may be a DU or another module. The DU herein may be a DU in an open radio access network (open radio access network, O-RAN) architecture.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a base station or a terminal. Certainly, the processor and the storage medium may alternatively exist in the base station or the terminal as discrete components.

All or some of the foregoing embodiments may be implemented by using software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a dedicated computer, a computer network, a network device, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or logically conflicted, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B each may be singular or plural. In the text descriptions of this application, the character "/" usually indicates an "or" relationship between the associated objects. In the formula of this application, the character "/" indicates a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
migrating, by a first integrated access and backhaul IAB node, from a first IAB donor node to a second IAB donor node; and
triggering, by the first IAB node, a terminal in inactive state served by a cell of the first IAB node to initiate a radio resource control RRC connection resume process.

2. The method according to claim 1, wherein the triggering, by the first IAB node, a terminal in inactive state served by a cell of the first IAB node to initiate an RRC connection resume process comprises:
sending, by the first IAB node, first indication information to the terminal in inactive state, wherein the first indication information indicates the terminal in inactive state to update a radio access network-based notification area RNA.

3. The method according to claim 2, wherein before the sending, by the first IAB node, first indication information to the terminal in inactive state, the method further comprises:
receiving, by the first IAB node, the first indication information from the second IAB donor node.

4. The method according to claim 1, wherein the triggering, by the first IAB node, a terminal in inactive state served by a cell of the first IAB node to initiate an RRC connection resume process comprises:
sending, by the first IAB node, a broadcast message to the terminal in inactive state, wherein the broadcast message comprises one or more of the following: an updated cell identity of the first IAB node, an updated tracking area code TAC of the first IAB node, or an updated radio access network-based notification area code RAC of the first IAB node.

5. The method according to claim 4, wherein before the sending, by the first IAB node, a broadcast message to the terminal in inactive state, the method further comprises:
updating, by the first IAB node, one or more of the following: a cell identity of the first IAB node, a TAC of the first IAB node, or an RAC of the first IAB node.

6. The method according to claim 4, wherein before the sending, by the first IAB node, a broadcast message to the terminal in inactive state, the method further comprises:
receiving, by the first IAB node, one or more of the following from the second IAB donor node: the updated cell identity of the first IAB node, the updated TAC of the first IAB node, or the updated RAC of the first IAB node.

7. The method according to claim 1, wherein the triggering, by the first IAB node, a terminal in inactive state served by a cell of the first IAB node to initiate an RRC connection resume process comprises:
sending, by the first IAB node, a paging message to the terminal in inactive state.

8. The method according to claim 7, wherein before the sending, by the first IAB node, a paging message to the terminal in inactive state, the method further comprises:
receiving, by the first IAB node, paging information from the second IAB donor node.

9. A communication method, comprising:
receiving, by a terminal in inactive state, first indication information from a first integrated access and backhaul IAB node, wherein the first indication information indicates the terminal in inactive state to update a radio access network-based notification area RNA; and
initiating, by the terminal, an RNA update process based on the first indication information.

10. A communication method, comprising:
sending, by a first integrated access and backhaul IAB donor node, first indication information to a second IAB donor node, wherein the first indication information indicates a terminal in inactive state served by a cell of a first IAB node to update a radio access network-based notification area RNA, wherein
the first IAB donor node is a source donor of the first IAB node, and the second IAB donor node is a target donor of the first IAB node.

11. The method according to claim 10, wherein the first IAB donor node further sends identification information of the first IAB node to the second IAB donor node.

12. A communication method, comprising:
receiving, by a second integrated access and backhaul IAB donor node, first indication information from a first IAB donor node, wherein the first indication information indicates a terminal in inactive state served by a cell of a first IAB node to update a radio access network-based notification area RNA, wherein
a source donor of the first IAB node is the first IAB donor node, and a target donor of the first IAB is the second IAB donor node; and
sending, by the second IAB donor node, the first indication information to the first IAB node.

13. The method according to claim 12, wherein before the sending, by the second IAB donor node, the first indication information to the first IAB node, the method further comprises:
receiving, by the second IAB donor node, identification information of the first IAB node from the first IAB donor node; and
determining, by the second IAB donor node, the first IAB node based on the identification information of the first IAB node.

14. A communication method, comprising:
sending, by a first integrated access and backhaul IAB donor node, paging information to a second IAB donor node, wherein
the first IAB donor node is a source donor of a first IAB node, and the second IAB donor node is a target donor of the first IAB node.

15. The method according to claim 14, wherein the paging information comprises identification information of the first IAB node.

16. A communication method, comprising:
receiving, by a second integrated access and backhaul IAB donor node, paging information from a first IAB donor node; and
sending, by the second IAB donor node, the paging information to a first IAB node, wherein
a source donor of the first IAB node is the first IAB donor node, and a target donor of the first IAB node is the second IAB donor node.

17. The method according to claim 16, wherein the paging information comprises identification information of the first IAB node, and before the sending, by the second IAB donor node, the paging information to a first IAB node, the method further comprises:
determining, by the second IAB donor node, the first IAB node based on the identification information of the first IAB node.

18. A communication apparatus, comprising a unit configured to implement the method according to any one of claims 1 to 8, a unit configured to implement the method according to claim 9, a unit configured to implement the method according to claim 10 or 11, a unit configured to implement the method according to claim 12 or 13, a unit configured to implement the method according to claim 14 or 15, or a unit configured to implement the method according to claim 16 or 17.

19. A communication apparatus, comprising a processor, wherein the processor is configured to execute instructions, to enable the apparatus to implement the method according to any one of claims 1 to 8, implement the method according to claim 9, implement the method according to claim 10 or 11, implement the method according to claim 12 or 13, implement the method according to claim 14 or 15, or implement the method according to claim 16 or 17.

20. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and through a logic circuit or by executing code instructions, the processor is configured to implement the method according to any one of claims 1 to 8, implement the method according to claim 9, implement the method according to claim 10 or 11, implement the method according to claim 12 or 13, implement the method according to claim 14 or 15, or implement the method according to claim 16 or 17.

21. A computer-readable storage medium, wherein the storage medium stores a computer program or instructions, and when the computer program or the instructions are executed by a communication apparatus, the method according to any one of claims 1 to 8 is implemented, the method according to claim 9 is implemented, the method according to claim 10 or 11 is implemented, the method according to claim 12 or 13 is implemented, the method according to claim 14 or 15 is implemented, or the method according to claim 16 or 17 is implemented.

22. A computer program product, comprising a computer program or instructions, wherein when the computer program or the instructions are run by an apparatus, the method according to any one of claims 1 to 8 is performed, the method according to claim 9 is performed, the method according to claim 10 or 11 is performed, the method according to claim 12 or 13 is performed, the method according to claim 14 or 15 is performed, or the method according to claim 16 or 17 is performed.

23. A chip, comprising a processor, wherein the processor is coupled to a memory, and is configured to execute a computer program or instructions stored in the memory, to enable the chip to implement the method according to any one of claims 1 to 8, implement the method according to claim 9, implement the method according to claim 10 or 11, implement the method according to claim 12 or 13, implement the method according to claim 14 or 15, or implement the method according to claim 16 or 17.
